# FASCICULE DE BREVET EUROPEEN

(11) **EP 3 146 158 B1**
(45) Date de publication et mention de la délivrance du brevet: **14.08.2019**
(21) Numéro de dépôt: 15732315.5
(22) Date de dépôt: 21.05.2015
(51) Int. Cl.: F01D 5/28, B29C 70/02, F01D 11/12, F01D 5/22, F01D 9/02

(54) **PROCÉDÉ DE FABRICATION D'UNE AUBE DE TURBOMACHINE EN MATÉRIAU COMPOSITE, AUBE AINSI OBTENUE ET TURBOMACHINE L'INCORPORANT**
VERFAHREN ZUR HERSTELLUNG EINER TURBINENMOTORSCHAUFEL AUS EINEM VERBUNDSTOFF, RESULTIERENDE SCHAUFEL UND TURBINENMOTOR DAMIT
METHOD FOR MANUFACTURING A TURBINE ENGINE VANE MADE OF A COMPOSITE MATERIAL, RESULTING VANE AND TURBINE ENGINE INCLUDING SAME

(30) Priorité: 22.05.2014 FR 1454607
(43) Date de publication de la demande: 29.03.2017
(73) Titulaire: SAFRAN AIRCRAFT ENGINES, 75015 Paris (FR)
(72) Inventeur: ROUSSILLE, Clément, 33200 Bordeaux (FR); BLACHIER, Jéremy, 33000 Bordeaux (FR); LEFEBVRE, Marie, 33200 Bordeaux (FR)
(74) Mandataire: Desormiere, Pierre-Louis
(86) Numéro de dépôt international: PCT/FR2015/051337
(87) Numéro de publication internationale: WO 2015/177473

(56) Documents cités:
- WO-A1-2010/061140
- WO-A2-2013/034857
- FR-A1- 2 946 999

## Description

### Arrière-plan de l'invention

L'invention concerne des aubes de turbine ou de compresseur de turbomachine, les aubes étant en matériau composite à renfort fibreux densifié par une matrice.

Le domaine visé est celui des turbines à gaz pour moteurs aéronautiques ou pour turbines industrielles.

La réalisation d'aubes en matériau composite pour turbomachines a déjà été proposée, le renfort fibreux étant obtenu notamment à partir de fils en carbone ou céramique et la matrice étant en matériau céramique ou en matériau organique ou en carbone.

Le document WO 2010/061140 A1 décrit un procédé permettant la fabrication d'aubes mobiles de turbine en matériau composite avec talon et plateforme intérieure intégrés par : réalisation d'une ébauche fibreuse par tissage multicouches ; mise en forme de l'ébauche au moyen d'un outillage pour obtenir une préforme fibreuse ayant des parties formant préforme de pied et pale d'aube, préforme de talon d'aube et préforme de plateforme intérieure d'aube ; et densification de la préforme fibreuse par une matrice. L'ébauche fibreuse est tissée avec une première partie en forme de bande ou nappe destinée à former la préforme de pied et pale d'aube et une deuxième partie en forme de bande ou nappe destinée à former les préformes de talon et plateforme intérieure, la deuxième partie traversant la première au niveau des emplacements du talon et de la plateforme intérieure.

Le document WO 2011/080443 A1 décrit un procédé similaire dans lequel l'ébauche fibreuse est tissée avec une première partie en forme de bande ou nappe destinée à former une préforme de pied et pale d'aube, une deuxième partie en forme de bande ou nappe destinée à former une préforme de becquets de recouvrement de talon d'aube, et une troisième partie en forme de bande ou nappe destinée à former une préforme de léchettes de talon d'aube et une préforme de plateforme intérieure d'aube, la deuxième partie et la troisième partie traversant la première au niveau des emplacements du talon et de la plateforme intérieure. Un tel procédé est relativement complexe à mettre en oeuvre. En outre, la réalisation d'une ébauche fibreuse tissée avec doubles traversées induit des sollicitations importantes sur les fils pouvant causer des ruptures de fils notamment lorsqu'ils sont en carbone ou céramique.

Les documents US 2012/099982, FR 2946999 et WO 2013/034857 divulguent la fabrication d'une aube de turbomachine en matériau composite à renfort fibreux densifié par une matrice et comprenant une pale, une première plateforme située à une extrémité longitudinale de la pale, et au moins un élément fonctionnel s'étendant à partir de la face externe de la première plateforme.

### Objet et résumé de l'invention

L'invention a pour but de proposer un procédé simplifié permettant de fabriquer une aube de turbomachine en matériau composite en une seule pièce tout en limitant les sollicitations imposées aux fils lors du tissage d'une ébauche fibreuse d'où est obtenue une préforme de l'aube.

De façon générale, l'invention vise un procédé de fabrication d'une aube de turbomachine en matériau composite à renfort fibreux densifié par une matrice, l'aube comprenant une pale, une première plateforme située à une extrémité longitudinale de la pale et ayant une face interne de délimitation de veine et une face externe opposée à la face interne, et au moins un élément fonctionnel s'étendant à partir de la face externe de la première plateforme en se raccordant à ladite face externe selon une direction sensiblement circonférentielle, le procédé comprenant :
- la réalisation par tissage multicouches d'une ébauche fibreuse en une seule pièce,
- la mise en forme de l'ébauche fibreuse pour obtenir une préforme fibreuse en une seule pièce ayant une première partie formant une préforme de la pale d'aube et une deuxième partie formant une préforme de la première plateforme et au moins une préforme d'élément fonctionnel, et
- la densification de la préforme fibreuse par une matrice pour obtenir une aube en matériau composite ayant un renfort fibreux formé par la préforme et densifié par la matrice et formant une seule pièce avec la pale, la première plateforme et ledit au moins un élément fonctionnel intégrés,
procédé dans lequel la deuxième partie de la préforme comprend un ensemble de couches de fils liées entre elles par tissage avec aménagement d'au moins une zone déliée permettant le déploiement de la ou chaque préforme d'élément fonctionnel par rapport à la préforme de la première plateforme. La partie de l'ébauche fibreuse correspondant à la deuxième partie de préforme peut comprendre une ou plusieurs couches de fils prélevées de la partie de l'ébauche fibreuse correspondant à la préforme de pale, à un ou plusieurs niveaux en direction longitudinale, la préforme de pale ayant une épaisseur variable en direction longitudinale.

Par élément fonctionnel, on entend ici une partie d'une aube qui se raccorde à la surface externe d'une plateforme pour former, par exemple, une léchette de plateforme extérieure, ou talon, d'aube mobile, ou un crochet de montage s'étendant à partir de la face externe d'une plateforme extérieure ou éventuellement intérieure d'aube fixe, ou encore un élément de support d'abradable s'étendant à partir de la face externe d'une plateforme intérieure ou éventuellement extérieure d'aube fixe. Par face interne de délimitation de veine, on entend ici la face d'une plateforme d'aube intérieure ou extérieure qui, en service dans un compresseur ou une turbine, est exposée au flux d'air ou de gaz circulant dans le compresseur ou la turbine. Les termes intérieur et extérieur sont ici utilisés en relation avec la situation par rapport à l'axe de la turbomachine dans laquelle l'aube est montée, la plateforme intérieure étant par exemple plus proche de l'axe que la plateforme extérieure. Le terme circonférentiel est utilisé ici avec référence à l'axe de la turbomachine dans laquelle l'aube est montée.

Avec le procédé de l'invention, grâce à l'aménagement de zones déliées, il n'est pas nécessaire de réaliser l'ébauche fibreuse avec des nappes tissées séparées pour obtenir une préforme d'élément fonctionnel et une préforme de plateforme d'aube. Par rapport à l'art antérieur évoqué plus haut, le nombre de traversées et la complexité de l'ébauche fibreuse sont donc réduits, ce qui limite le risque de rupture de fils et simplifie la conception de l'outillage de mise en forme de la préforme.

L'ensemble de couches de la deuxième partie de préforme peut comprendre un groupe de couches de fils communes avec la préforme de pale.

La partie de l'ébauche fibreuse correspondant à la deuxième partie de préforme peut être pour partie dans le prolongement de la partie de l'ébauche correspondant à la préforme de pale, évitant la nécessité d'une traversée totale de cette dernière comme dans l'art antérieur évoqué plus haut.

La mise en forme de l'ébauche fibreuse peut être réalisée de manière à obtenir une préforme fibreuse en une seule pièce ayant en outre une troisième partie formant préforme d'une deuxième plateforme située à une extrémité longitudinale de la pale opposée à celle où se trouve la première plateforme, et l'ensemble de couches de fils de la partie de l'ébauche fibreuse correspondant à la deuxième partie de préforme peut alors comprendre un groupe de couches de fils communes avec la partie de l'ébauche fibreuse correspondant à la préforme de pale et un groupe de couches de fils communes avec la partie de l'ébauche correspondant à la préforme de deuxième plateforme.

Selon un premier mode de mise en oeuvre du procédé selon l'invention, celui-ci vise la fabrication d'une aube mobile de turbomachine, l'aube étant en matériau composite à renfort fibreux densifié par une matrice et comprenant un pied, une pale, une plateforme extérieure formant un talon situé à une extrémité longitudinale de la pale et ayant une face interne de délimitation de veine et une face externe opposée à la face interne, et des léchettes de talon s'étendant chacune à partir de la face externe du talon en se raccordant à ladite face externe selon une direction sensiblement circonférentielle, le procédé comprenant :
- la réalisation par tissage multicouches d'une ébauche fibreuse en une seule pièce,
- la mise en forme de l'ébauche fibreuse pour obtenir une préforme fibreuse en une seule pièce ayant une première partie formant une préforme de pale, une deuxième partie formant une préforme de talon et des préformes de léchettes de talon et une troisième partie située dans le prolongement de la première partie et formant une préforme de pied, et
- la densification de la préforme fibreuse par une matrice pour obtenir une aube en matériau composite ayant un renfort fibreux formé par la préforme et densifié par la matrice et formant une seule pièce avec pied, pale, talon et léchettes de talon intégrés,
procédé dans lequel la deuxième partie de la préforme comprend un ensemble de couches de fils liées entre elles par tissage avec aménagement de zones déliées permettant le déploiement des préformes de léchettes de talon par rapport à la préforme de talon. La partie de l'ébauche fibreuse correspondant à la deuxième partie de préforme peut comprendre une ou plusieurs couches de fils prélevées de la partie de l'ébauche fibreuse correspondant à la préforme de pale, à un ou plusieurs niveaux en direction longitudinale, la préforme de pale ayant une épaisseur variable en direction longitudinale.

L'ensemble de couches de la deuxième partie de préforme peut comprendre un groupe de couches de fils communes avec la préforme de pale. L'ensemble de couches de la deuxième partie de préforme peut en outre comprendre un groupe de couches de fils supplémentaires non communes avec la préforme de pale d'aube.

La mise en forme de l'ébauche fibreuse peut être réalisée afin d'obtenir une préforme fibreuse en une seule pièce ayant en outre une quatrième partie formant préforme de plateforme intérieure. Dans ce cas, l'ensemble de couches de fils de la partie de l'ébauche fibreuse correspondant à la deuxième partie de préforme peut comprendre un groupe de couches de fils communes avec la partie de l'ébauche fibreuse correspondant à la préforme de pale et un groupe de couches de fils communes avec la partie de l'ébauche correspondant à la préforme de plateforme intérieure. Toujours dans ce cas, la préforme de pale peut comprendre un ensemble de couches de fils communes avec la préforme de pied et traversées par un ensemble de couches de fils de la préforme de plateforme intérieure au niveau de l'emplacement de celle-ci.

La préforme de pied peut comprendre un nombre de couches de fils supérieur à celui de la préforme de pale, et, dans l'ébauche fibreuse, l'ensemble de couches de fils de la partie de l'ébauche correspondant à la deuxième partie de préforme comprend un groupe de couches de fils communes avec la partie de l'ébauche correspondant à la préforme de pale et un groupe de couches de fils communes avec la partie de l'ébauche correspondant à la préforme de pied et non utilisées dans la préforme de pale. On récupère ainsi au niveau de la partie de l'ébauche correspondant à la deuxième partie de préforme un groupe de couches de fils utilisés dans la partie de l'ébauche correspondant à la préforme de pied. L'ensemble de couches de la deuxième partie de préforme peut en outre comprendre un groupe de couches de fils supplémentaires non communes avec la préforme de pied d'aube.

Selon un deuxième mode de mise en oeuvre du procédé selon l'invention, celui-ci vise la fabrication d'une aube fixe de turbomachine, l'aube étant en matériau composite à renfort fibreux densifié par une matrice et comprenant une pale, une première plateforme située à une extrémité longitudinale de la pale et ayant une face interne de délimitation de veine et une face externe opposée à la face interne, et des crochets de montage s'étendant à partir de la face externe de la première plateforme en se raccordant à ladite face externe selon une direction sensiblement circonférentielle, le procédé comprenant :
- la réalisation par tissage multicouches d'une ébauche fibreuse en une seule pièce,
- la mise en forme de l'ébauche fibreuse pour obtenir une préforme fibreuse en une seule pièce ayant une première partie formant une préforme de pale, une deuxième partie formant une préforme de première plateforme et des préformes de crochets de montage, et
- la densification de la préforme fibreuse par une matrice pour obtenir une aube en matériau composite ayant un renfort fibreux formé par la préforme et densifié par la matrice et formant une seule pièce avec pale, première plateforme et crochets de montage intégrés,
procédé dans lequel la deuxième partie de la préforme comprend un ensemble de couches de fils liées entre elles par tissage avec aménagement de zones déliées permettant le déploiement des préformes de crochets de montage par rapport à la préforme de première plateforme. La partie de l'ébauche fibreuse correspondant à la deuxième partie de préforme peut comprendre une ou plusieurs couches de fils prélevées de la partie de l'ébauche fibreuse correspondant à la préforme de pale, à un ou plusieurs niveaux en direction longitudinale, la préforme de pale ayant une épaisseur variable en direction longitudinale.

La préforme de première plateforme peut être une préforme de plateforme extérieure ou une préforme de plateforme intérieure.

L'ensemble de couches de la deuxième partie de préforme peut comprendre un groupe de couches de fils communes avec la préforme de pale.

Selon un troisième mode de mise en oeuvre du procédé selon l'invention, celui-ci vise un procédé de fabrication d'une aube fixe de turbomachine, l'aube étant en matériau composite à renfort fibreux densifié par une matrice et comprenant une pale, une première plateforme située à une extrémité longitudinale de la pale et ayant une face interne de délimitation de veine et une face externe opposée à la face interne, et au moins un élément de support d'abradable s'étendant à partir de la face externe de la première plateforme en se raccordant à ladite face externe selon une direction sensiblement circonférentielle, le procédé comprenant :
- la réalisation par tissage multicouches d'une ébauche fibreuse en une seule pièce,
- la mise en forme de l'ébauche fibreuse pour obtenir une préforme fibreuse en une seule pièce ayant une première partie formant une préforme de pale, une deuxième partie formant une préforme de première plateforme et au moins une préforme d'élément de support d'abradable, et
- la densification de la préforme fibreuse par une matrice pour obtenir une aube en matériau composite ayant un renfort fibreux formé par la préforme et densifié par la matrice et formant une seule pièce avec pale, première plateforme et au moins un élément support d'abradable intégrés,
procédé dans lequel la deuxième partie de la préforme comprend un ensemble de couches de fils liées entre elles par tissage avec aménagement de zones déliées permettant le déploiement de la ou chaque préforme d'élément de support d'abradable par rapport à la préforme de première plateforme. La partie de l'ébauche fibreuse correspondant à la deuxième partie de préforme peut comprendre une ou plusieurs couches de fils prélevées de la partie de l'ébauche fibreuse correspondant à la préforme de pale, à un ou plusieurs niveaux en direction longitudinale, la préforme de pale ayant une épaisseur variable en direction longitudinale.

La préforme de première plateforme peut être une préforme de plateforme intérieure ou une préforme de plateforme extérieure.

L'ensemble de couches de la deuxième partie de préforme peut comprendre un groupe de couches de fils communes avec la préforme de pale.

Les premier et deuxième modes de mise en oeuvre du procédé selon l'invention peuvent être combinés entre eux pour fabriquer une aube fixe de turbomachine en matériau composite avec aube, plateforme extérieure, crochets de montage, plateforme intérieure et au moins un élément de support d'abradable intégrés.

Dans tout procédé selon l'invention, dans l'ébauche fibreuse, ledit ensemble de couches de fils peut comprendre des couches de fils de chaîne s'étendant dans la direction longitudinale de l'aube, et lesdites zones déliées s'étendent alors de façon continue en sens chaîne entre des côtés opposés de la partie de l'ébauche fibreuse correspondant à la deuxième partie de préforme, sur une distance limitée en sens trame.

Dans tout procédé selon l'invention, dans l'ébauche fibreuse, ledit ensemble de couches de fils peut comprendre des couches de fils de trame s'étendant dans la direction longitudinale de l'aube, et lesdites zones déliées s'étendent alors de façon continue en sens trame entre des côtés opposés de la partie de l'ébauche fibreuse correspondant à la deuxième partie de préforme, sur une distance limitée en sens chaîne.

L'invention a aussi pour objet une aube de turbomachine comprenant une pale, une première plateforme située à une extrémité longitudinale de la pale et ayant une face interne de délimitation de veine et une face externe opposée à la face interne, et au moins un élément fonctionnel s'étendant à partir de la face externe de la première plateforme en se raccordant à ladite face externe selon une direction sensiblement circonférentielle,
- l'aube étant en une seule pièce en matériau composite comprenant un renfort fibreux tissé multicouches densifié par une matrice, et
- le renfort fibreux étant en une seule pièce avec une première partie formant un renfort de pale d'aube et une deuxième partie formant un renfort de première plateforme et au moins un renfort d'élément fonctionnel,
aube dans laquelle la deuxième partie de renfort fibreux comprend un ensemble de couches de fils toutes liées entre elles par tissage hormis au niveau d'une zone de séparation entre le ou chaque renfort d'élément fonctionnel et le renfort de première plateforme.

Dans un premier mode particulier de réalisation d'une aube selon l'invention, celle-ci forme une aube mobile de turbomachine comprenant une pale, une plateforme extérieure formant un talon d'aube situé à une extrémité longitudinale de la pale et ayant une face interne de délimitation de veine et une face externe opposée à la face interne, et des léchettes de talon s'étendant à partir de la face externe du talon en se raccordant à ladite face externe selon une direction sensiblement circonférentielle,
- l'aube étant en une seule pièce en matériau composite comprenant un renfort fibreux tissé multicouches densifié par une matrice, et
- le renfort fibreux étant en une seule pièce avec une première partie formant un renfort de pale et une deuxième partie formant un renfort de talon et des renforts de léchettes de talon,
aube dans laquelle la deuxième partie de renfort fibreux comprend un ensemble de couches de fils toutes liées entre elles par tissage hormis au niveau de zones de séparation entre les renforts de léchettes de talon et le renfort de talon.

Dans un deuxième mode particulier de réalisation d'une aube selon l'invention, celle-ci forme une aube fixe de turbomachine comprenant une pale, une première plateforme située à une extrémité longitudinale de la pale et ayant une face interne de délimitation de veine et une face externe opposée à la face interne, et des crochets de montage de l'aube s'étendant à partir de la face externe de la première plateforme en se raccordant à ladite face externe selon une direction sensiblement circonférentielle,
- l'aube étant en une seule pièce en matériau composite comprenant un renfort fibreux tissé multicouches densifié par une matrice, et
- le renfort fibreux étant en une seule pièce avec une première partie formant un renfort de pale et une deuxième partie formant un renfort de première plateforme et des renforts de crochets de montage,
aube dans laquelle la deuxième partie de renfort fibreux comprend un ensemble de couches de fils toutes liées entre elles par tissage hormis au niveau de zones de séparation entre les renforts de crochets de montage et le renfort de première plateforme .

La première plateforme peut être une plateforme extérieure ou une plateforme intérieure.

Dans un troisième mode particulier de réalisation d'une aube selon l'invention, celle-ci forme une aube fixe de turbomachine comprenant une pale, une première plateforme située à une extrémité longitudinale de la pale et ayant une face interne de délimitation de veine et une face externe opposée à la face interne, et au moins un élément de support d'abradable s'étendant à partir de la face externe de la première plateforme en se raccordant à ladite face externe selon une direction sensiblement circonférentielle,
- l'aube étant en une seule pièce en matériau composite comprenant un renfort fibreux tissé multicouches densifié par une matrice, et
- le renfort fibreux étant en une seule pièce avec une première partie formant un renfort de pale et une deuxième partie formant un renfort de première plateforme et au moins un renfort d'élément de support d'abradable,
aube dans laquelle la deuxième partie de renfort fibreux comprend un ensemble de couches de fils toutes liées entre elles par tissage hormis au niveau de zone de séparation entre le ou chaque renfort d'élément de support d'abradable et le renfort de première plateforme .

La première plateforme peut être une plateforme intérieure ou une plateforme extérieure. Les deuxième et troisième modes de réalisation d'une aube selon l'invention peuvent être combinés entre eux pour former une aube fixe de turbomachine en matériau composite avec aube, plateforme extérieure, crochets de montage, plateforme intérieure et au moins un élément de support d'abradable intégrés.

Dans tous les modes de réalisation d'une aube selon l'invention, l'ensemble de couches de fils de la deuxième partie de renfort peut comprendre un groupe de couches de fils communes avec le renfort de pale.

L'invention a aussi pour objet une roue de turbine ou de compresseur de turbomachine comprenant des aubes telles que définies ci-avant en matériau composite à matrice céramique, ou une roue de compresseur de turbomachine comprenant des aubes telles que définies ci-avant en matériau composite à matrice organique, ainsi qu'une turbomachine ayant au moins une telle roue de turbine ou de compresseur.

### Brève description des dessins

L'invention sera mieux comprise à la lecture de la description faite ci-après, à titre indicatif mais non limitatif, en référence aux dessins annexés sur lesquels :
- la figure 1 est une vue très schématique partielle en coupe d'une partie d'une turbine basse pression d'une turbomachine ;
- la figure 2 est une vue très schématique en perspective d'une aube de roue mobile de la turbine de la figure 1 ;
- la figure 3 illustre de façon très schématique en élévation latérale un exemple de disposition d'ensembles de couches de fils dans une ébauche fibreuse réalisée par tissage multicouches et destinée à l'obtention d'une préforme fibreuse pour une aube du type de celle de la figure 2 ;
- les figures 4A, 4B, 4C, et 4D sont des vues en coupe à échelle agrandie selon les plans A, B, C et D de la figure 3 ;
- les figures 5A, 5B, 5C et 5D sont des vues partielles correspondant aux figures 4A, 4B, 4C et 4D, respectivement, montrant schématiquement un mode de tissage de l'ébauche fibreuse de la figure 3;
- les figures 6 à 8 illustrent des étapes successives de réalisation d'une préforme fibreuse pour une aube mobile à partir de l'ébauche fibreuse de la figure 3 ;
- la figure 9 illustre de façon très schématique en élévation latérale un autre exemple de disposition d'ensembles de couches de fils dans une ébauche fibreuse réalisée par tissage multicouches et destinée à l'obtention d'une préforme fibreuse pour une aube du type de celle de la figure 2 ;
- les figures 10A, 10B, 10C, 10D, et 10E sont des vues en coupe à échelle agrandie selon les plans A, B, C, D et E de la figure 9 ;
- la figure 11 indique des étapes successives d'un exemple de réalisation d'un procédé de fabrication d'une aube mobile de turbomachine conformément à l'invention ;
- la figure 12 illustre de façon très schématique en élévation latérale un exemple de disposition d'ensembles de couches de fils dans une ébauche fibreuse réalisée par tissage multicouches et destinée à l'obtention d'une préforme fibreuse pour une aube de roue fixe du type de celle de la figure 1 ;
- les figures 13A, 13B, 13C, et 13D sont des vues en coupe à échelle agrandie selon les plans A, B, C et D de la figure 12 ;
- les figures 14 à 16 illustrent des étapes successives de réalisation d'une préforme fibreuse pour une aube de roue fixe, à partir de l'ébauche de la figure 12 ;
- la figure 17 illustre de façon très schématique en élévation latérale un exemple de disposition d'ensembles de couches de fils dans une ébauche fibreuse réalisée par tissage multicouches et destinée à l'obtention d'une préforme fibreuse pour une aube de roue fixe du type de celle de la figure 1 ;
- les figures 18 A, 18B, 18C et 18D sont des vues en coupe à échelle agrandie selon les plans A, B, C et D de la figure 17 ;
- les figures 19 à 21 illustrent des étapes successives de réalisation d'une préforme fibreuse pour une aube de roue fixe, à partir de l'ébauche de la figure 17 ; et
- la figure 22 est une vue schématique partielle illustrant une variante de réalisation d'une aube de roue fixe de turbomachine conforme à l'invention.

### Description détaillée de modes de réalisation

L'invention est applicable à différents types d'aubes de turbomachine, notamment des aubes de roue mobile ou de roue fixe de turbine ou de compresseur de différents corps de turbine à gaz. Par roue fixe de turbine ou de compresseur, on entend ici un ensemble d'aubes non rotatif formant distributeur de turbine ou redresseur de compresseur.

### Mode de réalisation : aube de roue mobile de turbine basse pression

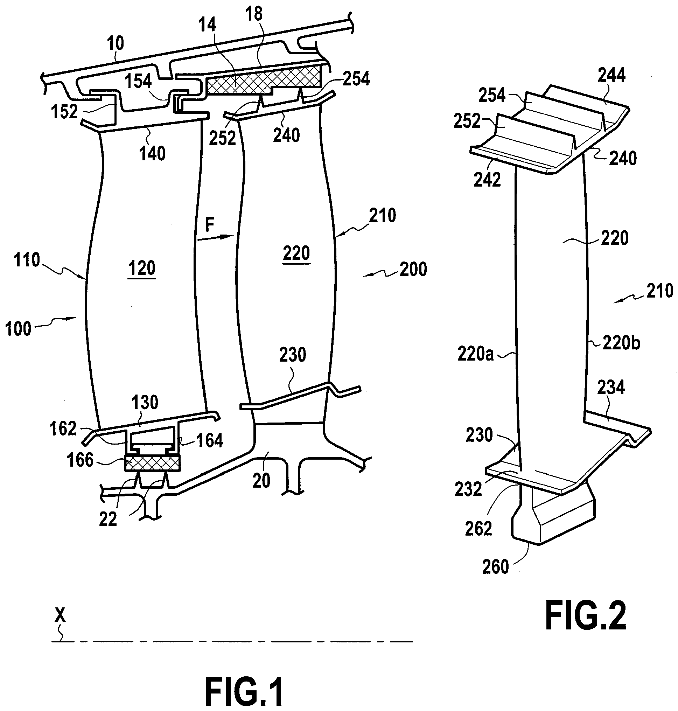

La turbine basse pression montrée très schématiquement et partiellement sur la figure 1 comprend une pluralité de roues fixes 100 alternant avec des roues mobiles 200 dans la direction de l'axe X de la turbine, une seule paire de roue fixe et roue mobile étant montrée.

Une roue fixe 100 comprend une pluralité d'aubes 110 ayant chacune une pale 120 s'étendant entre une plateforme intérieure 130 et une plateforme extérieure 140. Des éléments de support 162, 164 font saillie vers l'intérieur à partir de la face externe de la plateforme intérieure 130 en se raccordant à cette face externe le long de zones de raccordement s'étendant en direction sensiblement circonférentielle. Les éléments de support 162 et 164 ont un profil en L et supportent un bloc de matériau abradable 166. Des crochets de montage 152 et 154 font saillie vers l'extérieur à partir de la face externe de la plateforme extérieure 140 en se raccordant à cette face externe le long de zones de raccordement s'étendant en direction sensiblement circonférentielle. Les crochets 152 et 154 permettant le montage de l'aube dans un carter de turbine 10.

Une roue mobile 200 comprend une pluralité d'aubes 210 (figures 1 et 2) ayant chacune une pale 220 s'étendant en direction longitudinale entre une plateforme intérieure 230 et une plateforme extérieure, ou talon, 240. Un pied 260 formé par une partie de plus forte épaisseur, par exemple à section en forme de bulbe se raccorde par une échasse 262 à la face externe de la plateforme intérieure 230. Des léchettes de talon 252, 254 font saillie vers l'extérieur à partir de la surface externe du talon 240 en se raccordant à cette face externe le long de zones de raccordement s'étendant en direction sensiblement circonférentielle.

Les faces externes des plateformes 130 et 230 et les faces internes de la plateforme 140 et du talon 240 délimitent une veine d'écoulement de flux gazeux dans la turbine.

Chaque aube 210 est montée sur un rotor de turbine 20 par engagement du pied 260 dans un logement de forme correspondante aménagé à la périphérie du rotor. Dans ses parties d'extrémité amont et aval (dans le sens F d'écoulement du flux gazeux), la plate-forme 230 se termine par des becquets amont et aval 232 et 234. La pale 220 présente en section transversale un profil incurvé d'épaisseur variable entre son bord d'attaque 220a et son bord de fuite 220b. L'épaisseur de la pale peut également varier en direction longitudinale. Les léchettes de talon amont 252 et aval 254 ont des profils en forme de dents dont les extrémités peuvent pénétrer dans une couche de matériau abradable 14 porté par un anneau de turbine 18 pour réduire le jeu entre le sommet d'aube et l'anneau de turbine. Dans ses parties d'extrémité amont et aval, le talon 240 peut aussi se terminer par des becquets amont et aval 242 et 244. Le rotor de turbine supporte des léchettes 22 dont les extrémités peuvent pénétrer dans le matériau abradable 166 pour assurer l'étanchéité de la veine d'écoulement de flux gazeux du côté intérieur.

Un agencement de turbine basse pression de turbomachine tel que succinctement décrit ci-avant est bien connu en soi.

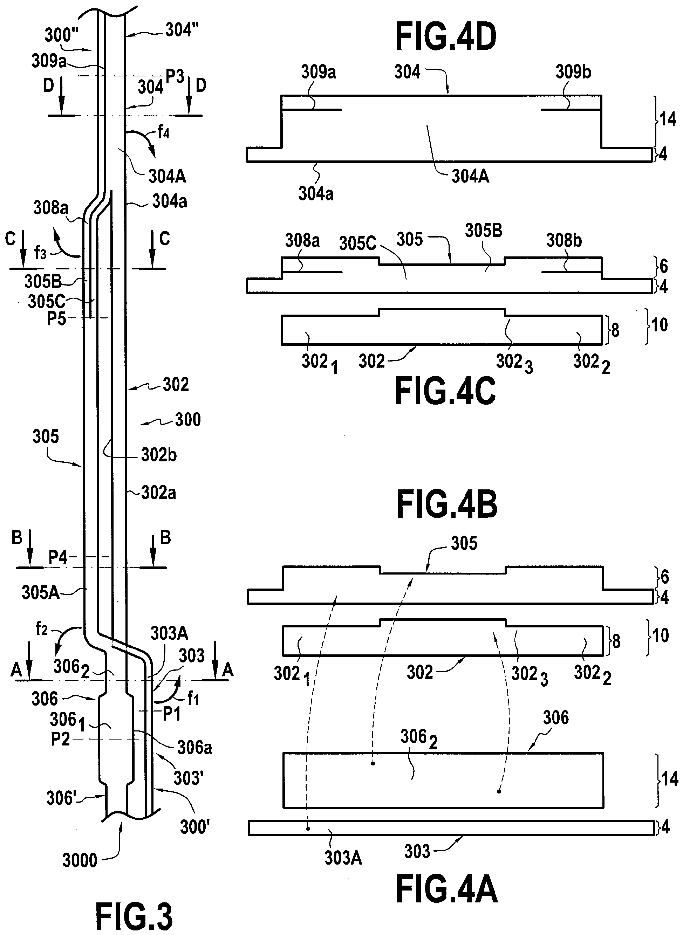

Les figures 3 et 4A à 4D montrent très schématiquement une ébauche fibreuse 300 à partir de laquelle une préforme fibreuse d'aube peut être mise en forme afin, après densification par une matrice et usinage éventuel, d'obtenir une aube en matériau composite à pale, pied, plateforme intérieure, talon et léchettes de talon intégrés du type de celle illustrée par la figure 2.

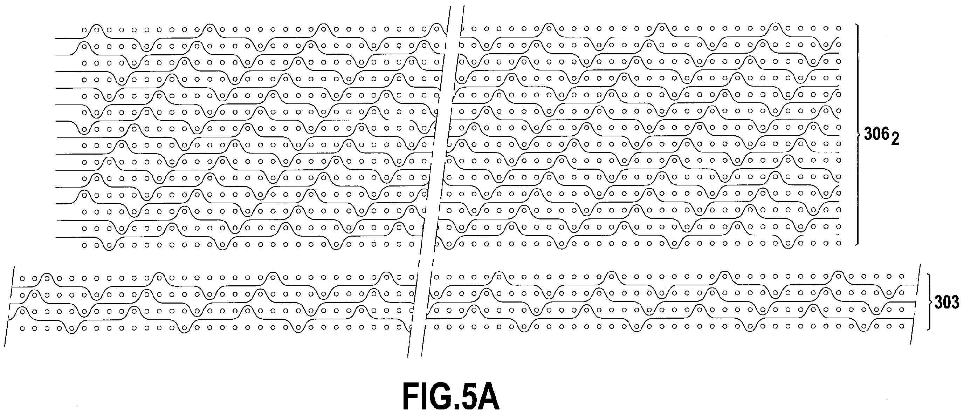

Dans ce mode de réalisation comme dans tous les autres modes de réalisation ici décrits, l'ébauche fibreuse est réalisée par tissage tridimensionnel ou multicouches et seules les enveloppes des différentes parties tissées de l'ébauche sont représentées par souci de clarté (hormis sur les figures 5A à 5D). Le tissage est réalisé par exemple avec la direction chaîne correspondant à la direction longitudinale de l'aube à réaliser, chaque partie de l'ébauche comprenant une pluralité de couches de fils de chaîne liées entre elles au moins partiellement par des fils de trame d'une pluralité de couches de fils de trame.

L'ébauche 300 comprend une partie 302 destinée à former la préforme de pale de l'aube à réaliser. La partie 302 peut présenter une épaisseur plus faible dans ses parties latérales 302₁, 302₂ adjacentes aux bords d'attaque et aux bords de fuite de la pale de l'aube à réaliser que dans sa partie centrale 302₃, la différence d'épaisseur étant ici obtenue par un nombre différent de couches de fils de chaîne.

L'ébauche 300 comprend aussi une partie 306 ayant un segment 306₁ destiné à former la préforme de pied de l'aube à réaliser et un segment 306₂ destiné à former la préforme d'échasse de l'aube à réaliser. La partie 302 se situe dans la continuité du segment 306₂ de la partie 306 en partageant avec celle-ci des couches de fils de chaîne communes. Toutefois, la partie 306₂ a dans cet exemple une épaisseur supérieure à celle de la partie 302₃, cette épaisseur supérieure étant obtenue par un nombre plus élevé de couches de fils de chaîne, de sorte qu'une partie des couches de fils de chaîne de la partie 306 ne se retrouve pas dans la partie 302. Le segment 306₁ présente une épaisseur supérieure à celle du segment 306₂ afin de présenter une forme correspondant à celle du bulbe du pied de l'aube à réaliser. Cette épaisseur supérieure peut être obtenue par augmentation du titre et/ou de la contexture des fils de trame. En variante ou en complément, un insert pourrait être introduit localement lors du tissage. Pour une description plus détaillée de la réalisation d'une partie d'ébauche fibreuse correspondant à une préforme de pied d'aube, on pourra se reporter par exemple au document précité WO 2010/061140 A1.

L'ébauche 300 comprend encore une partie 303 qui s'étend le long d'une face 306a de la partie 306, sans être liée à la partie 306. Les fils de chaîne des couches de fils de chaîne de la partie 303 traversent la partie 302 au niveau de son raccordement à la partie 306. Les couches de fils de chaîne excédentaires de la partie 306, c'est-à-dire celles non reprises dans la partie 302, sont réunies par tissage avec celles de la partie 303, après que celle-ci a traversé la partie 302, pour former une partie 305. La partie 305 s'étend le long de la face 302b de la partie 302 opposée à la face 302a correspondant à la face 306a de la partie 306. La partie 305 n'est pas liée par tissage à la partie 302 sur son trajet le long de celle-ci.

A l'extrémité de la partie 302 opposée à celle qui se raccorde à la partie 306, une partie 304 est formée prolongeant les parties 302 et 305 et en les réunissant par tissage, les couches de fils de la partie 305 pouvant au moins en partie se retrouver du côté de la face 304a de la partie 304 correspondant à la face 302a de la partie 302 .

Un segment 303A de la partie 303 s'étendant le long de la face 306a de la partie 306 et un segment 305A de la partie 305 prolongeant le segment 303A et s'étendant le long de la face 302b de la partie 302, sont destinés à former la préforme de plateforme intérieure de l'aube à réaliser.

Dans sa partie terminale avant raccordement à la partie 304, la partie 305 présente des segments adjacents 305B et 305C destinés à former une partie de la préforme de talon et des préformes de léchettes de talon de l'aube à réaliser. Les segments 305B et 305C sont liés entre eux uniquement dans leur partie centrale pour ménager des zones déliées 308a, 308b s'étendant en sens chaîne tout le long de leurs bords amont et aval et en sens trame sur une distance limitée à partir de ces bords (figure 3 et 4C).

La partie des préformes de talon et de léchettes de talon de l'aube à réaliser, qui est complémentaire de celle formée par les segments 305B et 305C, est issue d'un segment 304A de la partie 304 situé dans le prolongement des segments 305A et 305B et de la partie 302. Des zones déliées 309a, 309b sont ménagées lors du tissage dans le segment 304A tout le long de celui-ci en sens chaîne et sur une distance limitée à partir de ses bords amont et aval, en sens trame (figure 4D). Les zones déliées 308a et 309a se situent dans la continuité l'une de l'autre, de même que les zones déliées 308b et 309b. Comme décrit plus loin, les zones déliées 308a, 308b, 309a et 309b ont pour fonction de permettre le déploiement de préformes de léchettes de talon de l'aube à réaliser.

Sur les vues en coupe 4A et 4B, des flèches indiquent les correspondances entre des ensembles de couches de fils de chaîne situés initialement dans les parties 303 et 306 et, ensuite, dans les parties 302 et 305. Dans l'ébauche fibreuse, le nombre total de couches de fils de chaîne est, dans cet exemple, égal à 18. Les chiffres avec accolades sur les figures 4A à 4D indiquent un exemple de répartition des couches de fils de chaîne entre les différentes parties de l'ébauche fibreuse. Ainsi, dans cet exemple, la partie 303 comprend 4 couches, la partie 306 comprend 14 couches et la partie 302 comprend 8 couches dans ses parties latérales 302₁, 302₂ et 10 couches dans sa partie centrale 302₃. Bien entendu, le nombre total de couches de fils de chaîne et leur répartition pourront être différents, les nombres donnés dans l'exemple illustré ayant simplement pour but de faciliter la compréhension.

Les figures 5A à 5D montrent des plans d'armure de tissage à différents niveaux de l'ébauche fibreuse 300. Sur les figures 5A à 5D, les fils en coupe sont les fils de chaîne, les trajets des fils de trame étant représentés. Dans l'exemple illustré, le tissage est un tissage multicouches, ou tridimensionnel, réalisé avec une armure de type satin, ou multi-satin. D'autres types de tissage multicouches pourront être utilisés, par exemple un tissage multicouches à armure multi-toile ou un tissage à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure. Différents modes de tissage multicouches sont notamment décrits dans le document WO 2006/136755.

Pour l'application ici envisagée à une aube de turbine basse pression, les fils utilisés pour le tissage sont en matériau réfractaire, notamment céramique, tels que par exemple des fils à base de carbure de silicium (SiC) fournis sous la dénomination "Nicalon" par la société japonaise Nippon Carbon.

La figure 5A, correspondant à la figure 4A, montre un plan d'armure de tissage des parties 303 et 306₂.

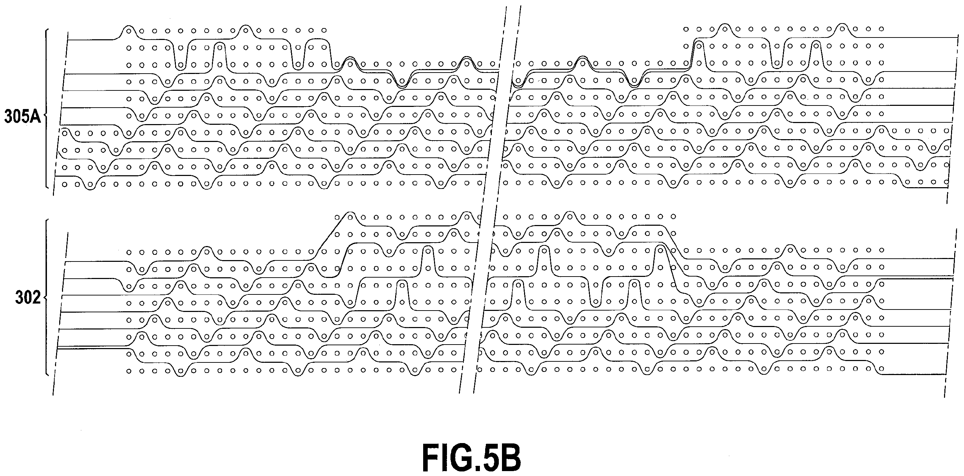

La figure 5B, correspondant à la figure 4B, montre un plan d'armure de tissage des parties 302 et 305 au voisinage du raccordement de la partie 302 avec la partie 306, c'est-à-dire, pour la partie 305, au niveau du segment 305A.

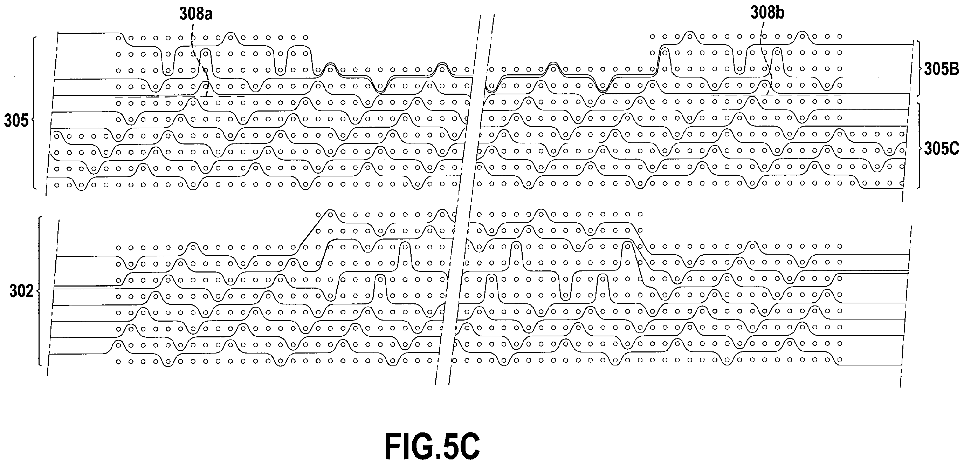

La figure 5C, correspondant à la figure 4C, montre un plan d'armure de tissage des parties 302 et 305 au voisinage du raccordement avec la partie 304, c'est-à-dire, pour le partie 305, au niveau des segments 305B et 305C. On constate que les segments 305B et 305C sont liés par tissage dans leur partie centrale tout en ménageant les zones déliées 308a et 308b dans les parties latérales.

Dans ses parties latérales, la partie 305 présente un nombre de couches de fils de chaîne supérieur au nombre de couches de fils de chaîne dans sa partie centrale, la différence correspondant à la différence entre le nombre des couches de fils de chaîne dans les parties latérales de la partie 302 et le nombre de couches de fils de chaîne dans la partie centrale de la partie 302. Toutes les couches de fils de chaîne de la partie 305 sont liées entre elles par tissage. Pour éviter des flottés de fils de trame trop importants au niveau des parties plus épaisses des parties 302 et 305, on pourra, dans certaines zones de l'ébauche fibreuse, traiter deux fils de chaîne d'une même colonne dans deux couches de fils de chaîne superposées comme un seul fil de chaîne de titre double. C'est ce qui est montré sur les figures 5B et 5C dans les parties plus épaisses des parties 302 et 305.

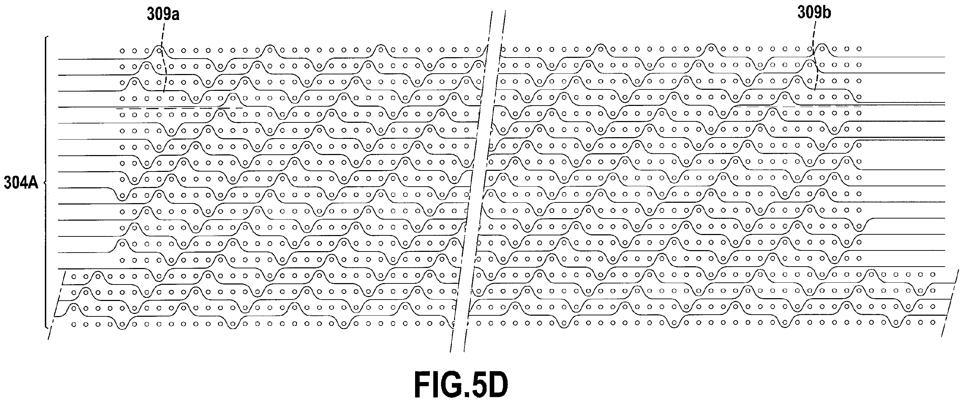

La figure 5D, correspondant à la figure 4D, montre un plan d'armure de tissage de la partie 304 au niveau du segment 304A. On constate la présence des zones déliées 309a et 309b.

Avantageusement, une rangée d'ébauches fibreuses est tissée en continu sous forme d'une bande 3000 (figure 3), deux ébauches adjacentes ayant leurs directions longitudinales opposées. Ainsi, les parties 303 et 306 de l'ébauche 300 se prolonge par les parties 303' et 306' de l'ébauche suivante 300'. A l'autre extrémité de l'ébauche 300, la partie 304 se prolonge par la partie 304" de l'ébauche précédente 300". Des zones de sur-longueurs sont aménagées entre ébauches voisines (sur-longueurs uniquement de fils de chaîne) pour former des zones de transition. On notera que plusieurs rangées parallèles d'ébauches peuvent être tissées dans une même bande, des zones de sur-longueurs étant alors de préférence aménagées aussi entre rangées parallèles (sur-longueurs uniquement de fils de trame).

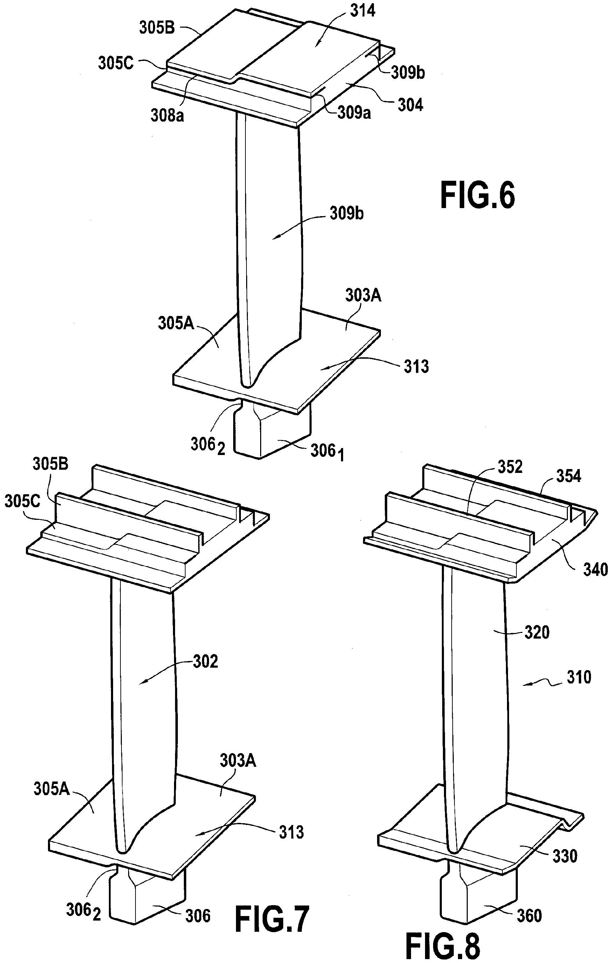

Les figures 6 à 8 montrent très schématiquement comment une préforme fibreuse ayant une forme voisine de celle de l'aube à fabriquer peut être obtenue à partir d'une ébauche 300.

Une ébauche 300 est découpée dans la bande 3000 en coupant les extrémités des parties 303 et 306 selon les plans P1 et P2 et l'extrémité de la partie 304 selon le plan P3. La partie 305 est coupée à l'extrémité du segment 305A selon le plan P4 et à l'extrémité des segments 305B et 305C selon le plan P5, les portions de la partie 305 s'étendant entre les plans P4 et P5 étant éliminées.

Le segment 303A est déployé suivant la flèche f1 de la figure 3. Le segment 305A est déployé suivant la flèche f2 de la figure 3. Les segments 205A et 205B déployés forment un plateau 313 (figure 6) destiné, après moulage, à former la préforme de plateforme intérieure de l'aube à fabriquer. La partie 305 présente, en sens trame, une largeur supérieure à celle de la partie 304, en débordant de chaque côté de celle-ci (voir notamment les figures 4A et 4B), afin de pouvoir former des parties de préforme correspondant aux becquets amont et aval de la plateforme intérieure de l'aube à fabriquer.

Les segments 305B et 305C partiellement liés par tissage sont déployés suivant la flèche f3 de la figure 3. La partie 304 est pliée suivant la flèche f4 de la figure 3. Les segments déployés 305B et 305C ainsi que la partie 304 pliée forment un plateau 314 destiné à former la préforme de talon et les préformes de léchettes de talon de l'aube à fabriquer. On retrouve l'excédent de largeur de la partie 305 permettant de former des préformes de becquets amont et aval dans la préforme de talon de l'aube à fabriquer.

Ensuite, comme montré sur la figure 7, les parties adjacentes aux zones déliées 308a-309a et 308b-309b, du côté extérieur, peuvent être déployées pour former des préformes de léchettes de talon de l'aube à fabriquer. Les zones déliées 308a et 309a se trouvent dans le prolongement l'une de l'autre pour former une zone déliée s'étendant de façon continue en sens chaîne tout le long du bord amont du plateau 314, entre deux côtés opposés du plateau 314, et sur une distance limitée en sens trame à partir du bord amont du plateau 314.

De façon similaire, les zones déliées 308b et 309b se trouvent dans le prolongement l'une de l'autre pour former une zone déliée s'étendant de façon continue en sens chaîne tout le long du bord aval du plateau 314, entre deux côtés opposés du plateau 314, et sur une distance limitée en sens trame à partir du bord aval du plateau 314.

Une préforme fibreuse 320 de l'aube à fabriquer est ensuite obtenue par moulage avec déformation de la partie 302 pour reproduire le profil incurvé de la pale de l'aube et déformation des plateaux 313, 314 pour reproduire des formes semblables à celles de la plateforme intérieure et du talon de l'aube, ainsi que pour conférer à la préforme de plateforme intérieure et à la préforme de talon des orientations correspondant aux orientations voulues de la plateforme intérieure et du talon par rapport à la direction longitudinale dans l'aube à fabriquer, comme le montre la figure 8 (le moule n'étant pas représenté). On obtient ainsi la préforme 310 avec une préforme 320 de pale, une préforme 360 de pied (avec préforme d'échasse), une préforme 330 de plateforme intérieure, une préforme 340 de talon et des préformes 352, 354 de léchettes de talon.

On notera que, de façon avantageuse, une grande liberté est offerte pour l'orientation des préformes de léchettes par rapport à la préforme de talon. Dans l'aube à fabriquer, tout angle souhaité entre chaque léchette et la surface extérieure du talon peut donc être obtenu.

Dans l'exemple de réalisation des figures 3 à 8, on utilise avantageusement pour la préforme de talon des couches de fils issues de la préforme de pied d'aube et non utilisées dans la préforme de pale d'aube, couches de fils que l'on fait bifurquer entre la préforme de pied et la partie de préforme d'aube formant préforme de talon et préformes de léchettes de talon.

Dans un autre exemple de réalisation, on utilise pour la partie de l'ébauche fibreuse correspondant à la préforme de talon des couches de fils issues de la partie de l'ébauche correspondant à la préforme de pale, la préforme de pale et la pale résultante ayant une épaisseur variable en direction longitudinale.

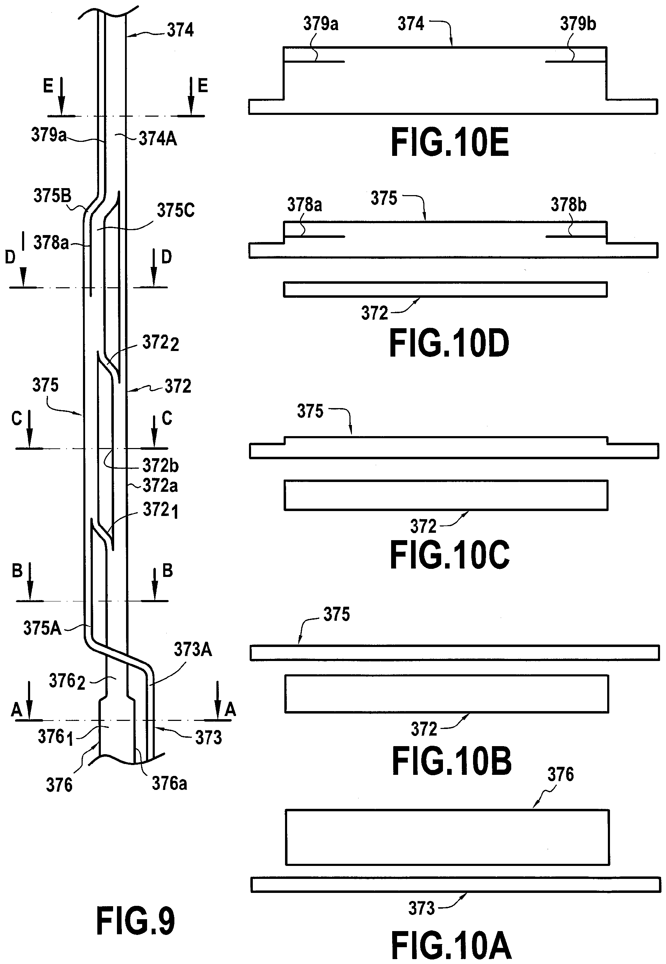

Pour cet autre exemple de réalisation, on peut utiliser une ébauche fibreuse tissée 370 telle qu'illustrée schématiquement par les figures 9 et 10A à 10E, le tissage étant réalisé sous forme d'une bande fibreuse comprenant une ou plusieurs rangées d'ébauches.

L'ébauche 370 comprend une partie 372 destinée à former la préforme de pale de l'aube à réaliser. Dans l'exemple illustré, la partie 372 a une épaisseur qui ne varie pas en direction transversale entre les parties latérales correspondant aux bords d'attaque et de fuite. Toutefois, cette épaisseur en direction transversale pourra varier comme dans le cas de la partie 302 de l'ébauche fibreuse des figures 3 et 4A à 4D.

L'ébauche 370 comprend aussi une partie 376 ayant un segment 376₁ destiné à former la préforme de pied de l'aube à réaliser et un segment 376₂ destiné à former la préforme d'échasse de l'aube à réaliser. La partie 372 se situe dans la continuité du segment 376₂, les nombres de couches de fils de chaîne dans la partie 372 et dans le segment 376₂ étant égaux dans cet exemple. On pourra toutefois, comme dans l'exemple des figures 3 et 4A à 4D, avoir une partie 376₂ avec une épaisseur supérieure à celle de la partie 372. Le segment 376₁ présente une épaisseur supérieure à celle du segment 376₂, obtenue par exemple par augmentation du titre et/ou de la contexture des fils de trame ou par introduction d'un insert, comme dans l'exemple des figures 3 et 4A à 4D.

L'ébauche comprend encore une partie 373 qui s'étend le long d'une face 376a de la partie 376 sans être liée à celle-ci. Les couches de fils de chaîne de la partie 373 traversent la partie 372 au niveau de son raccordement avec la partie 376 et forment une partie 375 en étant tissées avec une ou plusieurs couches de fils de chaîne issues de la partie 372 à un ou plusieurs niveaux de celle-ci en direction longitudinale, par exemple des couches de fils de chaîne 372₁ et 372₂, l'épaisseur de la partie 372 diminuant ainsi en direction longitudinale à partir de son extrémité raccordée à la partie 376.

La partie 375 s'étend le long de la face 372b de la partie 372 opposée à la face 372a qui correspond à la face 376a de la partie 376. La partie 375 n'est pas liée par tissage à la partie 372.

A l'extrémité de la partie 372 opposée à celle qui se raccorde à la partie 376, une partie 374 est formée prolongeant les parties 372 et 375 en réunissant par tissage leurs couches de fils de chaîne.

Un segment 373A de la partie 373 s'étendant le long de la face 376a de la partie 376 et un segment 375A de la partie 375 prolongeant le segment 373A et s'étendant le long de la face 372b de la partie 372 sont destinés à former la préforme de plateforme intérieure de l'aube à réaliser.

Dans sa partie terminale avant raccordement à la partie 374, la partie 375 présente des segments adjacents 375B et 375C destinés à former une partie de la préforme de talon et des préformes de léchettes de talon de l'aube à réaliser. Les segments 375B et 375C sont liés entre eux uniquement dans leur partie centrale pour ménager des zones déliées 378a, 378b s'étendant en sens chaîne tout le long de leurs bords amont et aval et en sens trame sur une distance limitée à partir de ces bords (figure 9 et 10D).

La partie des préformes de talon et de léchettes de talon de l'aube à réaliser, qui est complémentaire de celle formée par les segments 375B et 375C, est issue d'un segment 374A de la partie 374 situé dans le prolongement des segments 375A et 375B et de la partie 372. Des zones déliées 379a, 379b sont ménagées lors du tissage dans le segment 374A tout le long de celui-ci en sens chaîne et sur une distance limitée à partir de ses bords amont et aval, en sens trame (figure 4D). Les zones déliées 378a et 379a se situent dans la continuité l'une de l'autre, de même que les zones déliées 378b et 379b. Les zones déliées 378a, 378b, 379a et 379b ont pour fonction de permettre le déploiement de préformes de léchettes de talon de l'aube à réaliser.

On notera que les figures 10A, 10B, 10C, 10D et 10E sont des vues en coupe selon les plans A, B, C D et E au niveau, respectivement, du segment 373A , du segment 375A, de la partie médiane de la partie 375 après raccordement des couches de fils de chaîne 372₁, des segments 375B et 375C, et du segment 374A.

Après découpes appropriées, déploiement des segments 373A, 375A, 375B-375C et pliage du segment 374A, déploiement des parties adjacentes aux zones déliées et mise en forme par moulage, on obtient une préforme d'aube avec un partie de préforme de pale, une partie de préforme de pied et échasse, une partie de préforme de plateforme intérieure, et une partie de préforme de talon avec des parties de préformes de léchettes de talon, d'une manière similaire à celle décrite en référence aux figures 6 à 8.

En variante des deux exemples décrits ci-avant, on pourrait aussi amener des couches de fils supplémentaires au niveau de la partie de l'ébauche correspondant à la préforme de talon non nécessairement issues des parties de l'ébauche correspondant aux préformes de pied ou de pale. Toujours en variante, on pourrait encore retirer des couches de fils au niveau de la partie de l'ébauche correspondant à la préforme de talon.

Les trois différentes façons décrites d'amener des couches de fils de chaîne au niveau de la partie de l'ébauche correspondant à la préforme de talon et léchettes peuvent être mises en oeuvre séparément, ou combinées deux à deux ou toutes combinées entre elles.

De façon remarquable, on obtient une préforme fibreuse d'aube en une seule pièce avec préforme de talon et préformes de léchettes intégrées en limitant les traversées entre parties d'ébauche fibreuse lors du tissage. Cela résulte de la réalisation d'une partie de préforme d'aube formant préforme de talon et préformes de léchettes de talon par un ensemble de couches de fils liées entre elles par tissage avec aménagement de zones déliées permettant le déploiement des préformes de léchettes de talon par rapport à la préforme de talon.

Par ailleurs, lorsque l'aube à fabriquer comporte plus de deux léchettes de talon, le nombre voulu de préformes de léchettes de talon peut être obtenu en aménageant un nombre correspondant de zones déliées non adjacentes entre les bords amont et aval du plateau correspondant au talon, tel que le plateau 314 de la figure 6.

On notera que l'invention est applicable au cas où la préforme de plateforme intérieure d'aube est réalisée séparément avec une ouverture reproduisant sensiblement le profil de pale de l'aube à réaliser. Dans ce cas, on réalise une ébauche fibreuse par tissage sans la partie correspondant à la préforme de plateforme intérieure, c'est-à-dire, dans la mode de réalisation de la figure 3, sans la partie 303. La préforme de plateforme intérieure réalisée séparément peut alors être engagée sur l'ébauche fibreuse tissée jusqu'à sa position désirée, avant le déploiement de la partie de préforme d'aube formant préforme de talon et préformes de léchettes de talon. On pourrait aussi rapporter la préforme de plateforme extérieure à un stade ultérieur de fabrication, ou réaliser une plateforme extérieure et la rapporter après fabrication de l'aube avec pale et plateforme extérieure.

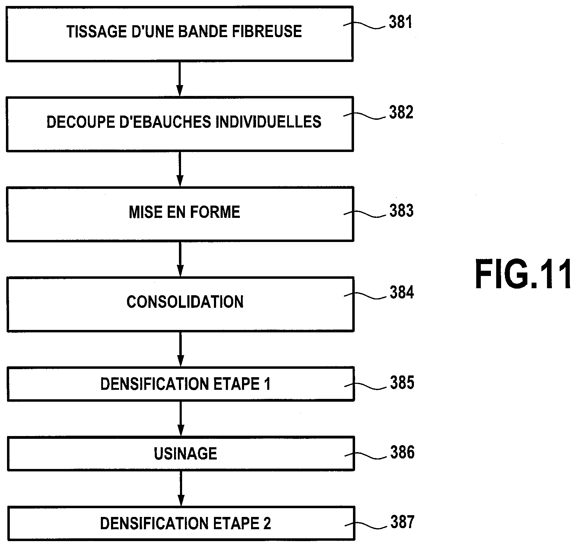

Des étapes successives d'un procédé de fabrication d'une aube en matériau composite à matrice céramique (CMC) sont indiquées sur la figure 11.

A l'étape 381, une bande fibreuse est tissée par tissage tridimensionnel comprenant une pluralité d'ébauches fibreuses, comme montré sur la figure 3 ou sur la figure 9, éventuellement avec plusieurs rangées d'ébauches fibreuses orientées en sens chaîne,

A l'étape 382, les ébauches fibreuses individuelles sont découpées.

A l'étape 383, une ébauche fibreuse est mise en forme dans un moule par exemple en graphite pour conformation de la préforme de pale, de la préforme de pied, de la préforme de plateforme intérieure, de la préforme de talon et des préformes de léchettes de talon, (comme illustré par exemple par les figures 6 à 8) afin d'obtenir une préforme d'aube.

A l'étape 384, la préforme d'aube est consolidée. De façon connue en soi, la consolidation peut être réalisée par imprégnation par une résine qui est réticulée et pyrolysée, la quantité de résine de consolidation étant choisie pour que le résidu de pyrolyse lie les fibres de la préforme de façon suffisante afin que celle-ci soit manipulable tout en conservant sa forme sans l'assistance d'un outillage. On peut utiliser une résine précurseur de carbone ou une résine précurseur de céramique. L'imprégnation par la résine de consolidation peut être réalisée par infusion ou injection dans le moule ou par imprégnation au stade de l'ébauche fibreuse, préalablement à la mise en forme. En variante, également de façon connue en soi, la consolidation peut être réalisée par densification partielle par un matériau céramique en utilisant un processus connu d'infiltration chimique en phase gazeuse, ou CVI (« Chemical Vapor Infiltration »).

La préforme consolidée peut être extraite de l'outillage de conformation pour réaliser une densification par une matrice céramique, par exemple en carbure de silicium SiC. On peut réaliser la densification par CVI.

La densification peut être réalisée en deux étapes successives (étapes 385 et 387) séparées par une étape 386 d'usinage de l'aube aux formes et dimensions désirées.

On notera qu'un pré-usinage peut être réalisé après consolidation et avant densification, notamment un pré-usinage de la plateforme intérieure et du talon pour éliminer des épaisseurs excédentaires et un pré-usinage des léchettes de talon, afin de se rapprocher de la forme de l'aube de la figure 2.

On notera aussi qu'un revêtement d'interphase de défragilisation peut être formé entre les fibres de la préforme et la matrice céramique, comme bien connu en soi.

### Mode de réalisation : aube de roue mobile de compresseur

On a envisagé ci-avant la réalisation d'une aube de roue mobile de turbine en matériau CMC.

L'invention est aussi applicable à des aubes de roues mobiles de compresseur de turbine à gaz. Dans ce dernier cas, lorsque les températures rencontrées en service sont moins élevées, notamment pour les étages amont d'un compresseur, on peut utiliser non pas un matériau CMC, mais par exemple un matériau composite à matrice organique (CMO) réalisé avec des fibres par exemple de carbone ou de verre et une matrice polymère.

Ainsi, après tissage d'un ensemble de bandes fibreuses, découpe d'ébauches individuelles et mise en forme au moyen d'un outillage de conformation, une préforme d'aube obtenue, maintenue dans son outillage, est imprégnée par une résine par injection ou infusion. Un traitement thermique de réticulation de la résine est ensuite effectué. Plusieurs cycles successifs d'imprégnation par une résine et réticulation de celle-ci peuvent être réalisés. Un usinage peut être réalisé entre deux cycles et/ou après la fin de la densification par la matrice polymère. La résine utilisée est une résine précurseur de matrice polymère, telle qu'une résine époxyde, bismaléimide ou polyimide, par exemple.

### Mode de réalisation : aube de distributeur de turbine

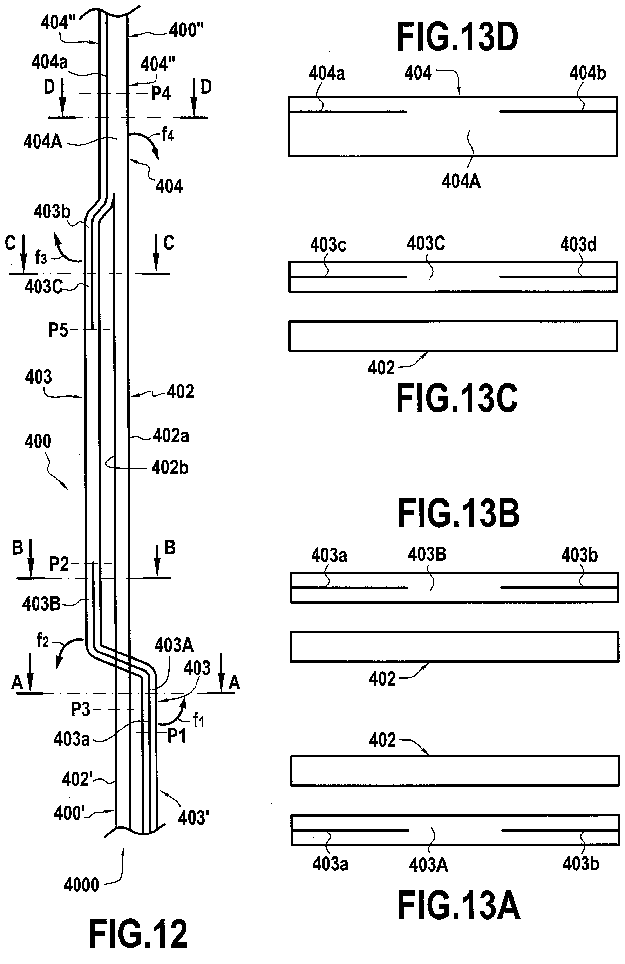

Les figures 12 et 13A à 13D montrent très schématiquement un premier exemple d'ébauche fibreuse 400 à partir de laquelle une préforme fibreuse d'aube peut être mise en forme afin, après densification par une matrice et usinage éventuel, d'obtenir une aube en matériau composite à pale, plateforme intérieure, éléments de support d'abradable, plateforme extérieure et crochets de montage intégrés du type de l'aube 110 illustrée par la figure 1.

On pourra utiliser pour le tissage de l'ébauche 400 différentes armures de tissage, par exemple une armure multi-satin semblable à celle des figures 5A à 5D, ou toute autre armure décrite notamment dans le document WO 2006/136755 déjà cité. Pour l'application envisagée à une aube de distributeur de turbine, les fils utilisés pour le tissage sont en matériau réfractaire, notamment céramique, tels que par exemple des fils à base de carbure de silicium (SiC) fournis sous la dénomination "Nicalon" par la société japonaise Nippon Carbon.

L'ébauche 400 comprend une partie 402 destinée à former la préforme de pale de l'aube à réaliser. Dans l'exemple illustré, la partie 402 a une épaisseur sensiblement constante. En variante, l'épaisseur de la partie 402 pourrait varier entre ses bords longitudinaux de façon similaire à la partie 302 dans le mode de réalisation de la figure 3.

L'ébauche 400 comprend aussi une partie 403 dont un segment 403A s'étend le long d'une première face 402a de la partie 402, sans être liée à la partie 402. Les fils de chaîne des couches de fils de chaîne de la partie 403 traversent la partie 402 pour s'étendre le long de la face 402b de la partie 402 opposée à la face 402a. La partie 403 s'étend le long de la face 402b de partie 402 sans être liée à la partie 402, sur une distance correspondant sensiblement à la dimension longitudinale de la pale de l'aube à fabriquer. A partir de son extrémité opposée à celle située au niveau de la traversée par la partie 403, la partie 402 est réunie par tissage avec la partie 403 pour former une partie 404.

Le segment 403A de la partie 403 s'étendant le long de la face 402a de la partie 402 et un segment 403B de la partie 403 prolongeant le segment 403A, après traversée de la partie 402, sont destinés à former la préforme de plateforme intérieure et les préformes d'éléments de support d'abradable de l'aube à réaliser. Des zones déliées 403a et 403b sont ménagées sensiblement à mi-épaisseur dans les segments 403A et 403B, la zone déliée 403a s'étendant en sens chaîne tout le long des bords amont des segments 403A et 403B et en sens trame sur une distance limitée à partir de ces bords amont, et la zone déliée 403b s'étendant en sens chaîne tout le long des bords aval des segments 403A et 403B et en sens trame sur une distance limitée à partir de ces bords aval (figures 12, 13A et 13B). Comme décrit plus loin, les zones déliées 403a et 403b ont pour fonction de permettre le déploiement de préformes d'éléments de support d'abradable de l'aube à réaliser.

Dans sa partie terminale avant raccordement à la partie 404, la partie 403 présente un segment 403C destinés à former une partie de la préforme de plateforme extérieure et des préformes de crochets de montage de l'aube à réaliser. Des zones déliées 403c et 403d sont ménagées sensiblement à mi-épaisseur dans le segment 403C, la zone déliée 403c s'étendant en sens chaîne tout le long du bord amont du segment 403C et en sens trame sur une distance limitée à partir de ce bord amont, et la zone déliée 403d s'étendant en sens chaîne tout le long du bord aval du segment 403C et en sens trame sur une distance limitée à partir de ce bord aval (figures 12 et 13C).

La partie des préformes de plateforme extérieure et de crochets de montage de l'aube à réaliser, qui est complémentaire de celle formée par le segment 403C, est issue d'un segment 404A de la partie 404. Des zones déliées 404a, 404b sont ménagées lors du tissage dans le segment 404A tout le long de celui-ci en sens chaîne et sur une distance limitée à partir de ses bords amont et aval, en sens trame (figures 12 et 13D). Les zones déliées 403c et 404a se situent dans la continuité l'une de l'autre, de même que les zones déliées 403d et 404b. Comme décrit plus loin, les zones déliées 403c, 403d, 404a et 404b ont pour fonction de permettre le déploiement de préformes de crochets de montage de l'aube à réaliser.

Avantageusement, une rangée d'ébauches fibreuses est tissée en continu sous forme d'une bande 4000 (figure 12), deux ébauches adjacentes ayant leurs directions longitudinales opposées. Ainsi, les parties 402 et 403 de l'ébauche 400 se prolongent par les parties 402' et 403' de l'ébauche suivante 400'. A l'autre extrémité de l'ébauche 400, la partie 404 se prolonge par la partie 404" de l'ébauche précédente 400". Des zones de sur-longueurs sont aménagées entre ébauches voisines (sur-longueurs uniquement de fils de chaîne) pour aménager des zones de transition. On notera que plusieurs rangées parallèles d'ébauches peuvent être tissées dans une même bande, des zones de sur-longueurs étant alors de préférence aménagées aussi entre rangées parallèles (sur-longueurs uniquement de fils de trame).

Les figures 12 et 14 à 16 montrent très schématiquement comment une préforme fibreuse ayant une forme voisine de celle de l'aube à fabriquer peut être obtenue à partir d'une ébauche 400.

Une ébauche 400 est découpée dans la bande 4000 en coupant la partie 403 aux extrémités des segments 403A et 403B selon les plans P1 et P2 et en coupant la partie 402 selon le plan P3 situé en avant de l'emplacement de traversée par la partie 403. La partie 404 est coupée à l'extrémité du segment 404A selon le plan P4. Le segment 403C est coupé selon le plan P5, les portions de la partie 403 s'étendant entre les plans P2 et P5 étant éliminées.

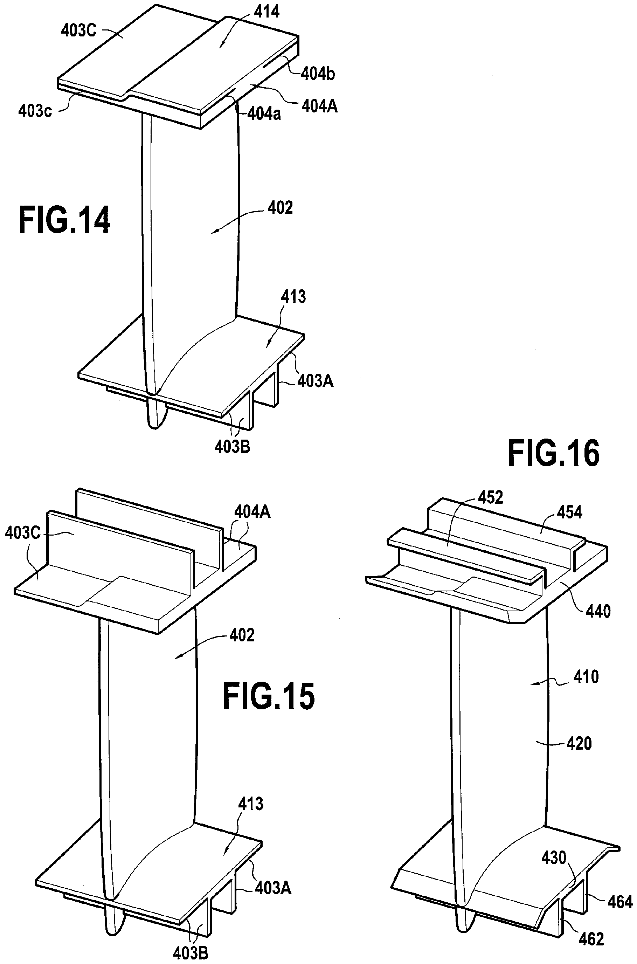

Les segments 403A et 403B sont déployés suivant les flèches f1 et f2 de la figure 12. Comme montré sur la figure 14, les parties des segments 403A et 403B situées du côté extérieur forment un plateau 413 destiné, après moulage, à former la préforme de plateforme intérieure tandis que les parties des segments 403A et 403B adjacentes aux zones déliées 403a et 403b, du côté intérieur, peuvent être déployées pour pouvoir former des préformes d'éléments de support d'abradable de l'aube à fabriquer.

Le segment 403C est déployé suivant la flèche f3 de la figure 12. Le segment 404A est plié suivant la flèche f4 de la figure 12. Le segment déployé 403C ainsi que le segment 404 plié forment un plateau 414 destiné à former la préforme de plateforme extérieure et les préformes de crochets de montage de l'aube à fabriquer.

Ensuite, comme montré sur la figure 15, les parties adjacentes aux zones déliées 403c, 403d, 404a et 404b, du côté extérieur, peuvent être déployées pour pouvoir former des préformes de crochets de montage de l'aube à fabriquer. Les zones déliées 403c et 404a se trouvent dans le prolongement l'une de l'autre pour former une zone déliée s'étendant de façon continue en sens chaîne tout le long du bord amont du plateau 414, entre deux côtés opposés du plateau 414, et sur une distance limitée en sens trame à partir du bord amont du plateau 414. De façon similaire, les zones déliées 403d et 404b se trouvent dans le prolongement l'une de l'autre pour former une zone déliée s'étendant de façon continue en sens chaîne tout le long du bord aval du plateau 414, entre deux côtés opposés du plateau 414, et sur une distance limitée en sens trame à partir du bord aval du plateau 414.

Une préforme fibreuse 410 de l'aube à fabriquer est ensuite obtenue par moulage pour obtenir le profil incurvé de la pale de l'aube, des formes semblables à celles des plateformes intérieure et extérieure de l'aube, des orientations des préformes de plateforme intérieure et préforme extérieure correspondant aux orientations voulues de la plateforme intérieure et de la plateforme extérieure par rapport à la direction longitudinale dans l'aube à fabriquer, ainsi que des formes correspondant à celles des éléments de support et des crochets de montage, comme le montre la figure 16 (le moule n'étant pas représenté). On obtient ainsi la préforme 410 avec une préforme 420 de pale, une préforme 430 de plateforme intérieure, des préformes 462, 464 d'éléments de support d'abradable, une préforme 440 de plateforme extérieure et des préformes 452, 454 de crochets de montage.

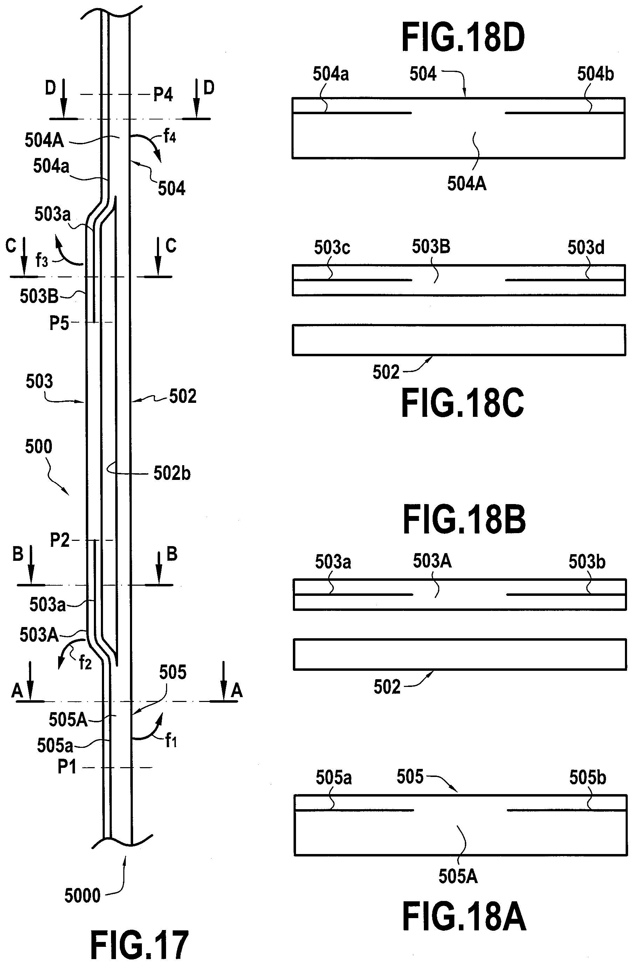

Les figures 17 et 18A à 18D montrent très schématiquement un deuxième exemple d'ébauche fibreuse 500 à partir de laquelle une préforme fibreuse d'aube peut être mise en forme afin, après densification par une matrice et usinage éventuel, d'obtenir une aube en matériau composite à pale, plateforme intérieure, éléments de support d'abradable, plateforme extérieure et crochets de montage intégrés du type de l'aube 110 illustrée par la figure 1.

L'ébauche fibreuse 500 diffère de l'ébauche fibreuse 400 en ce qu'elle est sensiblement symétrique par rapport à un plan transversal médian, la partie de l'ébauche correspondant à la préforme de plateforme intérieure et de supports d'abradable ayant une configuration similaire à celle de la partie de l'ébauche correspondant à la préforme de plateforme extérieure et de crochets de montage.

Ainsi, l'ébauche 500 comprend une partie 502 destinée à former la préforme de pale de l'aube à réaliser. Dans l'exemple illustré, la partie 502 a une épaisseur sensiblement constante. En variante, l'épaisseur de la partie 502 pourrait varier entre ses bords longitudinaux de façon similaire à la partie 302 dans le mode de réalisation de la figure 3.

L'ébauche 500 comprend aussi une partie 503 qui s'étend le long d'une face 502b de la partie 502 sans être liée par tissage à celle-ci. Aux extrémités longitudinales de la partie 502, les couches de fils des parties 502 et 503 sont réunies par tissage pour former des parties 504 et 505.

Un segment 505A de la partie 505 et un segment 503A de la partie 503 qui se raccorde au segment 505A sont destinés à former une préforme de plateforme intérieure et des préformes de supports d'abradable de l'aube à réaliser. Des zones déliées 505a, 505b et 503a, 503b sont ménagées sensiblement à mi-épaisseur dans les segments 505A et 503A, les zones déliées 505a et 503a s'étendant en sens chaîne tout le long des bords amont des segments 505A et 503A et en sens trame sur une distance limitée à partir de ces bords amont, et les zones déliées 505b et 503b s'étendant en sens chaîne tout le long des bords aval des segments 505A et 503A et en sens trame sur une distance limitée à partir de ces bords aval (figures 17, 18A et 18B). Les zones déliées 505a, 503a, 505b et 503b ont pour fonction de permettre le déploiement de préformes d'éléments de support d'abradable de l'aube à réaliser.

Un segment 504A de la partie 504 et un segment 503B de la partie 503 qui se raccorde au segment 505A sont destinés à former une préforme de plateforme extérieure et des préformes de crochets de montage de l'aube à réaliser. Des zones déliées 503c, 504a et 503d, 504b sont ménagées sensiblement à mi-épaisseur dans les segments 503B et 504A, les zones déliées 503c et 504a s'étendant en sens chaîne tout le long des bords amont des segments 503B et 504A et en sens trame sur une distance limitée à partir de ces bords amont, et les zones déliées 503d et 504b s'étendant en sens chaîne tout le long des bords aval des segments 503B et 504A et en sens trame sur une distance limitée à partir de ces bords aval (figures 17, 18C et 18D). Les zones déliées 503c, 504a 503d et 504b ont pour fonction de permettre le déploiement de préformes de crochets de montage de l'aube à réaliser.

Avantageusement, au moins une rangée d'ébauches fibreuses 500 est tissée en continu sous forme d'une bande 5000 (figure 17).

Les figures 17 et 19 à 21 montrent très schématiquement comment une préforme fibreuse ayant une forme voisine de celle de l'aube à fabriquer peut être obtenue à partir de l'ébauche 500.

Une ébauche 500 est découpée dans la bande 5000 en coupant les parties 505 et 504 selon les plans P1 et P4 et en coupant la partie 503 au niveau des plans P2 et P5, les portions de la partie 503 s'étendant entre les plans P2 et P5 étant éliminées.

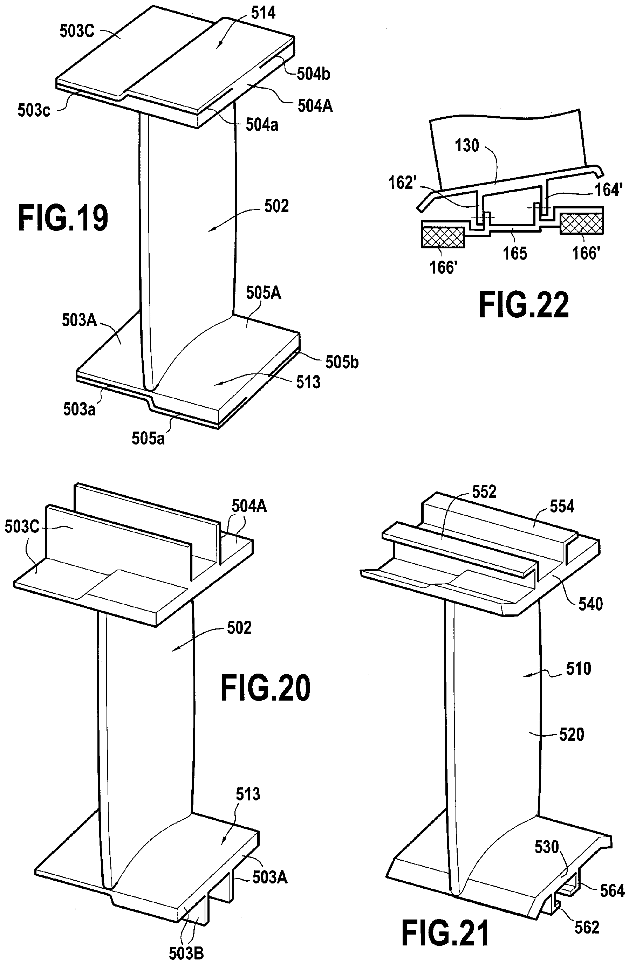

Les segments 505A et 503A sont déployés suivant les flèches f1 et f2 de la figure 17 et forment un plateau 513 (figure 19) destiné, après moulage, à former la préforme de plateforme intérieure et les préformes d'éléments de support d'abradable de l'aube à fabriquer. Les zones déliées 505a et 503a se trouvent dans le prolongement l'une de l'autre pour former une zone déliée s'étendant de façon continue en sens chaîne tout le long du bord amont du plateau 513, entre deux côtés opposés du plateau 513, et sur une distance limitée en sens trame à partir du bord amont du plateau 513. Les zones déliées 505b et 503b se trouvent dans le prolongement l'une de l'autre pour former une zone déliée s'étendant de façon continue en sens chaîne tout le long du bord aval du plateau 513, entre deux côtés opposés du plateau 513, et sur une distance limitée en sens trame à partir du bord aval du plateau 513.

Les segments 503B et 504A sont déployés suivant les flèches f3 et f4 de la figure 17 et forment un plateau 514 (figure 19) destiné à former la préforme de plateforme extérieure et les préformes de crochets de montage de l'aube à fabriquer. Les zones déliées 503c et 504a se trouvent dans le prolongement l'une de l'autre pour former une zone déliée s'étendant de façon continue en sens chaîne tout le long du bord aval du plateau 514, entre deux côtés opposés du plateau 514, et sur une distance limitée en sens trame à partir du bord amont du plateau 514. Les zones déliées 503d et 504b se trouvent dans le prolongement l'une de l'autre pour former une zone déliée s'étendant de façon continue en sens chaîne tout le long du bord aval du plateau 514, entre deux côtés opposés du plateau 514, et sur une distance limitée en sens trame à partir du bord aval du plateau 514.

Ensuite, comme montré sur la figure 20, les parties adjacentes aux zones déliées 505a, 503a, 505b et 503b, du côté intérieur, sont déployées pour pouvoir former des préformes d'éléments de support d'abradable de l'aube à fabriquer, tandis que les parties adjacentes aux zones déliées 503c, 503d, 504a et 504b, du côté extérieur, sont déployées pour pouvoir former des préformes de crochets de montage de l'aube à fabriquer.

Une préforme fibreuse 510 de l'aube à fabriquer est ensuite obtenue par moulage pour obtenir le profil incurvé de la pale de l'aube, des formes semblables à celles des plateformes intérieure et extérieure de l'aube, des orientations des préformes de plateforme intérieure et préforme extérieure correspondant aux orientations voulues de la plateforme intérieure et de la plateforme extérieure par rapport à la direction longitudinale dans l'aube à fabriquer, ainsi que des formes correspondant à celles des éléments de support et des crochets de montage, comme le montre la figure 21 (le moule n'étant pas représenté). On obtient ainsi la préforme 510 avec une préforme 520 de pale, une préforme 530 de plateforme intérieure, des préformes 562, 564 d'éléments de support d'abradable, une préforme 540 de plateforme extérieure et des préformes 552, 554 de crochets de montage.

De façon remarquable, dans les deux exemples de réalisation ci-dessus, on obtient une préforme fibreuse d'aube en une seule pièce avec préforme de plateformes intérieure et extérieure, préformes d'éléments de support d'abradable et préformes de crochets de montage intégrées en limitant les traversées entre parties d'ébauche fibreuse lors du tissage. Cela résulte de la réalisation d'une partie de préforme d'aube formant préforme de plateforme et préformes d'éléments de support ou de crochets de montage par un ensemble de couches de fils liées entre elles par tissage avec aménagement de zones déliées permettant le déploiement des préformes d'élément de support et de crochets de montage par rapport aux préformes de plateformes.

Bien entendu, des formes d'éléments de support d'abradable autres que celles à profil en L des éléments 162 et 164 pourront être réalisées.

Ainsi, la figure 22 montre des éléments de support 162', 164' qui font saillie sensiblement radialement à partir de la face externe de la plateforme intérieure 130 et sur lesquels peut être fixé un support intermédiaire 165 portant des blocs 166' de matériau abradable amont et aval pour coopérer avec des léchettes de roues mobiles voisines du côté amont et du côté aval du distributeur.

Il est également envisageable d'avoir un élément de support d'abradable unique faisant saillie à partir de la partie centrale de la face externe de la plateforme intérieure.

Pour obtenir une aube de distributeur de turbine en CMC à partir d'une ébauche fibreuse tissée, on peut procéder comme décrit plus haut en référence à la figure 11.

### Mode de réalisation : aube de redresseur de compresseur

On a envisagé ci-avant la réalisation d'une aube de distributeur de turbine en matériau CMC.

L'invention est aussi applicable de la même façon à des aubes en matériau CMC pour redresseur de compresseur de turbine à gaz.

Lorsque les températures rencontrées en service sont moins élevées, notamment pour les étages amont d'un compresseur, on peut utiliser pour les aubes de redresseur non pas un matériau CMC, mais un matériau composite à matrice organique (CMO) réalisé avec des fibres par exemple de carbone ou de verre et une matrice polymère.

Pour obtenir une aube de redresseur de compresseur en CMO à partir d'une ébauche fibreuse tissée, on peut procéder comme décrit plus haut pour une aube de roue mobile de compresseur en CMO.

Le procédé décrit dans les deux derniers modes de réalisation permet d'obtenir une aube avec pale, plateforme extérieure, crochets de montage, plateforme intérieure et éléments de support d'abradable intégrés.

Le procédé est toutefois applicable aussi à la réalisation d'une aube avec pale, plateforme extérieure, crochets de montage et plateforme intérieure intégrés, sans intégration d'éléments de support d'abradable, ainsi qu'à la réalisation d'une aube avec pale, plateforme extérieure, plateforme intérieure et au moins un élément de support d'abradable intégrés, sans intégration de crochets de montage.

### Variantes de réalisation

Dans les exemples de réalisation décrits d'aube de distributeur de turbine, la préforme de pale de l'aube présente un épaisseur constante en direction longitudinale. On peut en variante faire varier cette épaisseur de la même façon que celle décrite en référence aux figures 9 et 10A à 10E pour une aube de roue mobile de turbine. Il en est de même pour une aube de roue mobile de compresseur et pour une aube de redresseur de compresseur.

Dans les exemples de réalisation des figures 3, 9 et 12, la direction longitudinale des ébauches fibreuses dans la bande tissée peut être inversée.

Dans les exemples de réalisation décrits de distributeur de turbine, les crochets de montage sont associés à la plateforme extérieure tandis que le ou les éléments de support d'abradable sont associés à la plateforme intérieure. En variante, on peut associer des crochets de montage à la plateforme intérieure et un ou des éléments de support d'abradable à la plateforme extérieure.

Dans ce qui précède, il est envisagé un tissage des ébauches fibreuses avec leur direction longitudinale en sens chaîne. En variante, le tissage peut être réalisé avec la direction longitudinale des ébauches fibreuse en sens trame, trame et chaîne étant alors inversés.

## Revendications

1. Procédé de fabrication d'une aube de turbomachine, l'aube étant en matériau composite à renfort fibreux densifié par une matrice et comprenant une pale, une première plateforme située à une extrémité longitudinale de la pale et ayant une face interne de délimitation de veine et une face externe opposée à la face interne, et au moins un élément fonctionnel s'étendant à partir de la face externe de la première plateforme en se raccordant à ladite face externe selon une direction sensiblement circonférentielle, le procédé comprenant :
- la réalisation par tissage multicouches d'une ébauche fibreuse en une seule pièce (300 ; 400),
- la mise en forme de l'ébauche fibreuse pour obtenir une préforme fibreuse en une seule pièce (310 ; 410) ayant une première partie (302 ; 402) formant une préforme de la pale d'aube (320 ; 420) et une deuxième partie (313, 314 ; 413, 414) formant -une préforme de la première plateforme et au moins une préforme d'élément fonctionnel, et
- la densification de la préforme fibreuse par une matrice pour obtenir une aube en matériau composite (110 ; 210) ayant un renfort fibreux formé par la préforme et densifié par la matrice et formant une seule pièce avec la pale (120 ; 220), la première plateforme (140 ; 240) et ledit au moins un élément fonctionnel intégrés,
procédé dans lequel la deuxième partie de la préforme comprend un ensemble de couches de fils liées entre elles par tissage avec aménagement d'au moins une zone déliée permettant le déploiement de la ou chaque préforme d'élément fonctionnel par rapport à la préforme de la première plateforme, à un ou plusieurs niveaux en direction longitudinale, la préforme de pale ayant une épaisseur variable en direction longitudinale, le procédé **caractérisé en ce que** la partie de l'ébauche fibreuse correspondant à la deuxième partie de préforme comprend une ou plusieurs couches de fils prélevées de la partie de l'ébauche fibreuse correspondant à la préforme de pale.

2. Procédé selon la revendication 1, dans lequel l'ensemble de couches de la deuxième partie de préforme comprend un groupe de couches de fils communes avec la préforme de pale.

3. Procédé selon la revendication 1 ou 2, dans lequel la mise en forme de l'ébauche fibreuse est réalisée pour obtenir une préforme fibreuse en une seule pièce ayant en outre une troisième partie formant préforme d'une deuxième plateforme située à une extrémité longitudinale de la pale opposée à celle où se trouve la première plateforme, et l'ensemble de couches de fils de la partie de l'ébauche fibreuse correspondant à la deuxième partie de préforme comprend un groupe de couches de fils communes avec la partie de l'ébauche fibreuse correspondant à la préforme de pale et un groupe de couches de fils communes avec la partie de l'ébauche correspondant à la préforme de deuxième plateforme.

4. Procédé selon la revendication 1, dans lequel l'aube de turbomachine est une aube mobile (210) de turbomachine, l'aube étant en matériau composite à renfort fibreux densifié par une matrice et comprenant un pied (260), une pale (220), une plateforme extérieure (240) formant un talon situé à une extrémité longitudinale de la pale et ayant une face interne de délimitation de veine et une face externe opposée à la face interne, et des léchettes de talon (252, 254) s'étendant chacune à partir de la face externe du talon en se raccordant à ladite face externe selon une direction sensiblement circonférentielle, le procédé comprenant :
- la réalisation par tissage multicouches d'une ébauche fibreuse en une seule pièce (300),
- la mise en forme de l'ébauche fibreuse pour obtenir une préforme fibreuse en une seule pièce (310) ayant une première partie formant une préforme de pale (320), une deuxième partie (314) formant une préforme de talon et des préformes de léchettes de talon et une troisième partie (306) située dans le prolongement de la première partie et formant une préforme de pied, et
- la densification de la préforme fibreuse par une matrice pour obtenir une aube en matériau composite ayant un renfort fibreux formé par la préforme et densifié par la matrice et formant une seule pièce avec pied, pale, talon et léchettes de talon intégrés,
procédé dans lequel la deuxième partie de la préforme comprend un ensemble de couches de fils liées entre elles par tissage avec aménagement de zones déliées permettant le déploiement des préformes de léchettes de talon par rapport à la préforme de talon, et dans lequel la partie de l'ébauche fibreuse correspondant à la deuxième partie de préforme comprend une ou plusieurs couches de fils prélevées de la partie de l'ébauche fibreuse correspondant à la préforme de pale, à un ou plusieurs niveaux en direction longitudinale, la préforme de pale ayant une épaisseur variable en direction longitudinale.

5. Procédé selon la revendication 4, dans lequel l'ensemble de couches de la deuxième partie de préforme comprend un groupe de couches de fils communes avec la préforme de pale d'aube.

6. Procédé selon la revendication 4 ou 5, dans lequel la mise en forme de l'ébauche fibreuse est réalisée pour obtenir une préforme fibreuse en une seule pièce ayant en outre une quatrième partie formant préforme de plateforme intérieure, et l'ensemble de couches de fils de la partie de l'ébauche fibreuse correspondant à la deuxième partie de préforme comprend un groupe de couches de fils communes avec la partie de l'ébauche fibreuse correspondant à la préforme de pale et un groupe de couches de fils communes avec la partie de l'ébauche correspondant à la préforme de plateforme intérieure.

7. Procédé selon l'une quelconque des revendications 4 à 6, dans lequel la préforme de pied d'aube comprend un nombre de couches de fils supérieur à celui de la préforme de pale, et, dans l'ébauche fibreuse, l'ensemble de couches de fils de la partie de l'ébauche correspondant à la deuxième partie de préforme comprend un groupe de couches de fils communes avec la partie de l'ébauche correspondant à la préforme de pale et un groupe de couches de fils communes avec la partie de l'ébauche correspondant à la préforme de pied et non utilisées dans la préforme de pale.

8. Procédé selon la revendication 5 ou 7, dans lequel l'ensemble de couches de la deuxième partie de préforme comprend un groupe de couches de fils supplémentaires non communes avec la préforme de pied ou de pale d'aube.

9. Procédé selon l'une quelconque des revendications 4 à 8 dans lequel la mise en forme de l'ébauche fibreuse est réalisée pour obtenir une préforme fibreuse en une seule pièce ayant en outre une quatrième partie formant préforme de plateforme intérieure, et la préforme de pale comprend un ensemble de couches de fils communes avec la préforme de pied et traversées par un ensemble de couches de fils de la préforme de plateforme intérieure au niveau de l'emplacement de celle-ci.

10. Procédé selon la revendication 1, dans lequel l'aube de turbomachine est une aube fixe (110) de turbomachine, l'aube étant en matériau composite à renfort fibreux densifié par une matrice et comprenant une pale (120), une première plateforme (130) située à une extrémité longitudinale de la pale et ayant une face interne de délimitation de veine et une face externe opposée à la face interne, et des crochets de montage (152, 154) s'étendant à partir de la face externe de la première plateforme en se raccordant à ladite face externe selon une direction sensiblement circonférentielle, le procédé comprenant :
- la réalisation par tissage multicouches d'une ébauche fibreuse en une seule pièce (400),
- la mise en forme de l'ébauche fibreuse pour obtenir une préforme fibreuse en une seule pièce ayant une première partie (402) formant une préforme de pale (420), une deuxième partie (414) formant une préforme de première plateforme (430) et des préformes de crochets de montage d'aube, et
- la densification de la préforme fibreuse par une matrice pour obtenir une aube en matériau composite ayant un renfort fibreux formé par la préforme et densifié par la matrice et formant une seule pièce avec pale, première plateforme et crochets de montage intégrés,
procédé dans lequel la deuxième partie de la préforme comprend un ensemble de couches de fils liées entre elles par tissage avec aménagement de zones déliées permettant le déploiement des préformes de crochets de montage par rapport à la préforme de première plateforme, et dans lequel la partie de l'ébauche fibreuse correspondant à la deuxième partie de préforme comprend une ou plusieurs couches de fils prélevées de la partie de l'ébauche fibreuse correspondant à la préforme de pale, à un ou plusieurs niveaux en direction longitudinale, la préforme de pale ayant une épaisseur variable en direction longitudinale.

11. Procédé selon la revendication 10, dans lequel l'ensemble de couches de la deuxième partie de préforme comprend un groupe de couches de fils communes avec la préforme de pale.

12. Procédé selon la revendication 1, dans lequel l'aube de turbomachine est une aube fixe (110) de turbomachine, l'aube étant en matériau composite à renfort fibreux densifié par une matrice et comprenant une pale (120), une première plateforme (130) située à une extrémité longitudinale de la pale et ayant une face interne de délimitation de veine et une face externe opposée à la face interne, et au moins un élément de support d'abradable (162 ; 164) s'étendant à partir de la face externe de la première plateforme en se raccordant à ladite face externe selon une direction sensiblement circonférentielle, le procédé comprenant :
- la réalisation par tissage multicouches d'une ébauche fibreuse en une seule pièce (400),
- la mise en forme de l'ébauche fibreuse pour obtenir une préforme fibreuse en une seule pièce (410) ayant une première partie (402) formant une préforme de pale (420), une deuxième partie (413) formant une préforme de première plateforme (430) et au moins une préforme d'élément support d'abradable (462 ; 464), et
- la densification de la préforme fibreuse par une matrice pour obtenir une aube en matériau composite ayant un renfort fibreux formé par la préforme et densifié par la matrice et formant une seule pièce avec pale, première plateforme et au moins un élément de support d'abradable intégrés,
procédé dans lequel la deuxième partie de la préforme comprend un ensemble de couches de fils liées entre elles par tissage avec aménagement de zones déliées permettant le déploiement de préforme d'élément de support d'abradable par rapport à la préforme de première plateforme, et dans lequel la partie de l'ébauche fibreuse correspondant à la deuxième partie de préforme comprend une ou plusieurs couches de fils prélevées de la partie de l'ébauche fibreuse correspondant à la préforme de pale, à un ou plusieurs niveaux en direction longitudinale, la préforme de pale ayant une épaisseur variable en direction longitudinale.

13. Procédé selon la revendication 12, dans lequel l'ensemble de couches de la deuxième partie de préforme comprend un groupe de couches de fils communes avec la préforme de pale.

14. Procédé selon l'une quelconque des revendications 1 à 13, dans lequel, dans l'ébauche fibreuse, ledit ensemble de couches de fils comprend des couches de fils de chaîne s'étendant dans la direction longitudinale de l'aube, et lesdites zones déliées s'étendent de façon continue en sens chaîne entre des côtés opposés de la partie de l'ébauche fibreuse correspondant à la deuxième partie de préforme, sur une distance limitée en sens trame.

15. Procédé selon l'une quelconque des revendications 1 à 13, dans lequel, dans l'ébauche fibreuse, ledit ensemble de couches de fils comprend des couches de fils de trame s'étendant dans la direction longitudinale de l'aube, et lesdites zones déliées s'étendent de façon continue en sens trame entre des côtés opposés de la partie de l'ébauche fibreuse correspondant à la deuxième partie de préforme, sur une distance limitée en sens chaîne.

16. Aube de turbomachine (110 ; 210) comprenant une pale (120 ; 220), une première plateforme (140 ; 240) située à une extrémité longitudinale de la pale et ayant une face interne de délimitation de veine et une face externe opposée à la face interne, et au moins un élément fonctionnel (152 ; 252) s'étendant à partir de la face externe de la première plateforme en se raccordant à ladite face externe selon une direction sensiblement circonférentielle,
- l'aube étant en une seule pièce en matériau composite comprenant un renfort fibreux tissé multicouches densifié par une matrice, et
- le renfort fibreux étant en une seule pièce avec une première partie formant un renfort de pale d'aube et une deuxième partie formant un renfort de première plateforme d'aube et au moins un renfort d'élément fonctionnel,
l'aube **caractérisée en ce que** la deuxième partie de renfort fibreux comprend un ensemble de couches de fils toutes liées entre elles par tissage hormis au niveau d'une zone de séparation entre le ou chaque renfort d'élément fonctionnel et le renfort de première plateforme.

17. Aube selon la revendication 16, l'aube étant une aube mobile (210) de turbomachine comprenant une pale (220), une plateforme extérieure 240 formant un talon de l'aube situé à une extrémité longitudinale de la pale et ayant une face interne de délimitation de veine et une face externe opposée à la face interne, et des léchettes de talon (252, 254) s'étendant à partir de la face externe du talon en se raccordant à ladite face externe selon une direction sensiblement circonférentielle,
- l'aube étant en une seule pièce en matériau composite comprenant un renfort fibreux tissé multicouches densifié par une matrice, et
- le renfort fibreux étant en une seule pièce avec une première partie formant un renfort de pale et une deuxième partie formant un renfort de talon et des renforts de léchettes de talon,
aube dans laquelle la deuxième partie de renfort fibreux comprend un ensemble de couches de fils toutes liées entre elles par tissage hormis au niveau de zones de séparation entre les renforts de léchettes de talon et le renfort de talon.

18. Aube selon la revendication 16, l'aube étant une aube fixe (110) de turbomachine comprenant une pale (120), une première plateforme (140) située à une extrémité longitudinale de la pale et ayant une face interne de délimitation de veine et une face externe opposée à la face interne, et des crochets de montage (152, 154) de l'aube s'étendant à partir de la face externe de la première plateforme (140) en se raccordant à ladite face externe selon une direction sensiblement circonférentielle,
- l'aube étant en une seule pièce en matériau composite comprenant un renfort fibreux tissé multicouches densifié par une matrice, et
- le renfort fibreux étant en une seule pièce avec une première partie formant un renfort de pale et une deuxième partie formant un renfort de première plateforme et des renforts de crochets de montage,
aube dans laquelle la deuxième partie de renfort fibreux comprend un ensemble de couches de fils toutes liées entre elles par tissage hormis au niveau de zones de séparation entre les renforts de crochets de montage et le renfort de première plateforme.

19. Aube selon la revendication 16, l'aube étant une aube fixe (110) de turbomachine comprenant une pale (120), une première plateforme (130) située à une extrémité longitudinale de la pale et ayant une face interne de délimitation de veine et une face externe opposée à la face interne, et au moins un élément de support d'abradable (162 ; 164) s'étendant à partir de la face externe de la première plateforme en se raccordant à ladite face externe selon une direction sensiblement circonférentielle,
- l'aube étant en une seule pièce en matériau composite comprenant un renfort fibreux tissé multicouches densifié par une matrice, et
- le renfort fibreux étant en une seule pièce avec une première partie formant un renfort de pale et une deuxième partie formant un renfort de première plateforme et au moins un renfort d'élément de support d'abradable,
aube dans laquelle la deuxième partie de renfort fibreux comprend un ensemble de couches de fils toutes liées entre elles par tissage hormis au niveau de zones de séparation entre le ou chaque renfort d'élément de support d'abradable et le renfort de première plateforme intérieure.

20. Aube selon l'une quelconque des revendications 16 à 18, dans laquelle l'ensemble de couches de fils de la deuxième partie de renfort comprend un groupe de couches de fils communes avec le renfort de pale.

21. Roue de turbine ou de compresseur de turbomachine comprenant des aubes selon l'une quelconque des revendications 16 à 19 en matériau composite à matrice céramique.

22. Roue de compresseur de turbomachine comprenant des aubes selon l'une quelconque des revendications 16 à 19 en matériau composite à matrice organique.

23. Turbomachine ayant au moins une roue de turbine ou de compresseur selon la revendication 21 ou la revendication 22.

## Patentansprüche

1. Verfahren zur Herstellung einer Turbomaschinenschaufel, wobei die Schaufel aus Verbundmaterial mit durch eine Matrix verdichteter Faserverstärkung besteht und ein Blatt, eine erste Plattform, die sich an einem Längsende des Blatts befindet und eine Innenseite zur Begrenzung eines Strömungsgangs und eine Außenseite gegenüber der Innenseite aufweist, und zumindest ein Funktionselement umfasst, das sich von der Außenseite der ersten Plattform erstreckt und sich mit der Außenseite gemäß einer im Wesentlichen umlaufenden Richtung verbindet, wobei das Verfahren umfasst:
- die Herstellung eines Faserrohlings in einem Stück (300; 400) durch mehrlagige Verwebung,
- die Formung des Faserrohlings, um eine Faservorform aus einem Stück (310; 410) zu erhalten, mit einem ersten Teil (302; 402), der eine Vorform des Schaufelblatts (320; 420) bildet, und einem zweiten Teil (313, 314; 413, 414), der eine Vorform der ersten Plattform und zumindest eine Funktionselement-Vorform bildet, und
- die Verdichtung der Faservorform durch eine Matrix, um eine Schaufel aus Verbundmaterial (110; 210) mit einer Faserverstärkung zu erhalten, die durch die Vorform gebildet und durch die Matrix verdichtet wird und mit dem Blatt (120; 220), der ersten Plattform (140; 240) und dem zumindest einen Funktionselement, die integriert sind, ein Stück bildet,
wobei in dem Verfahren der zweite Teil der Vorform eine Anordnung von Lagen aus Fäden umfasst, die untereinander durch Verwebung unter Einbringung zumindest einer unverbundenen Zone verbunden sind, welche das Ausstülpen der oder jeder Funktionselement-Vorform in Bezug auf die Vorform der ersten Plattform erlaubt, in einem oder mehreren Bereichen in Längsrichtung, wobei die Blatt-Vorform eine in Längsrichtung variable Dicke aufweist und das Verfahren **dadurch gekennzeichnet ist, dass**
der Teil des Faserrohlings, der dem zweiten Teil der Vorform entspricht, eine oder mehrere Lagen aus Fäden umfasst, die aus dem Teil des Faserrohlings, welcher der Blatt-Vorform entspricht, abgegriffen werden.

2. Verfahren nach Anspruch 1, wobei die Anordnung von Lagen des zweiten Teils der Vorform eine Gruppe von Lagen aus Fäden umfasst, die mit der Blatt-Vorform geteilt werden.

3. Verfahren nach Anspruch 1 oder 2, wobei die Formung des Faserrohlings durchgeführt wird, um eine Faservorform aus einem Stück zu erhalten, die ferner einen dritten Teil aufweist, der eine Vorform einer zweiten Plattform bildet, die an einem Längsende des Blatts gegenüber jenem liegt, an dem sich die erste Plattform befindet, und die Anordnung von Lagen aus Fäden des Teils des Faserrohlings entsprechend dem zweiten Teil der Vorform eine Gruppe von Lagen aus Fäden umfasst, die mit dem Teil des Faserrohlings entsprechend der Blatt-Vorform geteilt werden, und eine Gruppe von Lagen aus Fäden, die mit dem Teil des Rohlings entsprechend der Vorform der zweiten Plattform geteilt werden.

4. Verfahren nach Anspruch 1, wobei die Turbomaschinenschaufel eine bewegliche Turbomaschinenschaufel (210) ist, wobei die Schaufel aus Verbundmaterial mit durch eine Matrix verdichteter Faserverstärkung besteht und einen Fuß (260), ein Blatt (220), eine äußere Plattform (240), die ein Deckband bildet, das sich an einem Längsende des Blatts befindet und eine Innenseite zur Begrenzung des Strömungsgangs und eine der Innenseite gegenüberliegende Außenseite aufweist, sowie Deckbandlaschen (252, 254) umfasst, die sich jeweils von der Außenseite des Deckbands erstrecken und sich mit der Außenseite gemäß einer im Wesentlichen umlaufenden Richtung verbinden, wobei das Verfahren umfasst:
- die Herstellung eines Faserrohlings in einem Stück (300) durch mehrlagige Verwebung,
- die Formung des Faserrohlings, um eine Faservorform aus einem Stück (310) zu erhalten, mit einem ersten Teil, der eine Blatt-Vorform (320) bildet, einem zweiten Teil (314), der eine Deckband-Vorform und Deckbandlaschen-Vorformen bildet, und einem dritten Teil (306), der sich in der Verlängerung des ersten Teils befindet und eine Fuß-Vorform bildet, und
- die Verdichtung der Faservorform durch eine Matrix, um eine Schaufel aus Verbundmaterial mit einer Faserverstärkung zu erhalten, die durch die Vorform gebildet und durch die Matrix verdichtet wird und mit dem Fuß, Blatt, Deckband und den Deckbandlaschen, die integriert sind, ein Stück bildet,
wobei in dem Verfahren der zweite Teil der Vorform eine Anordnung von Lagen aus Fäden umfasst, die untereinander durch Verwebung unter Einbringung von unverbundenen Zonen verbunden sind, welche das Ausstülpen der Deckbandlaschen-Vorformen in Bezug auf die Deckband-Vorform erlauben, und wobei der Teil des Faserrohlings entsprechend dem zweiten Teil der Vorform eine oder mehrere Lagen aus Fäden umfasst, die aus dem Teil des Faserrohlings, welcher der Blatt-Vorform entspricht, abgegriffen werden, in einem oder mehreren Bereichen in Längsrichtung, wobei die Blatt-Vorform eine in Längsrichtung variable Dicke aufweist.

5. Verfahren nach Anspruch 4, wobei die Anordnung von Lagen des zweiten Teils der Vorform eine Gruppe von Lagen aus Fäden umfasst, die mit der Schaufelblatt-Vorform geteilt werden.

6. Verfahren nach Anspruch 4 oder 5, wobei die Formung des Faserrohlings durchgeführt wird, um eine Faservorform aus einem Stück zu erhalten, die ferner einen vierten Teil aufweist, der eine Vorform der inneren Plattform bildet, und wobei die Anordnung von Lagen aus Fäden des Teils des Faserrohlings entsprechend dem zweiten Teil der Vorform eine Gruppe von Lagen aus Fäden umfasst, die mit dem Teil des Faserrohlings entsprechend der Blatt-Vorform geteilt werden, und eine Gruppe von Lagen aus Fäden, die mit dem Teil des Rohlings entsprechend der Vorform der inneren Plattform geteilt werden.

7. Verfahren nach einem der Ansprüche 4 bis 6, wobei die Schaufelfuß-Vorform eine größere Anzahl an Lagen aus Fäden umfasst als jene der Blatt-Vorform, und in dem Faserrohling die Anordnung von Lagen aus Fäden des Teils des Rohlings entsprechend dem zweiten Teil der Vorform eine Gruppe von Lagen aus Fäden umfasst, die mit dem Teil des Rohlings entsprechend der Blatt-Vorform geteilt werden, und eine Gruppe von Lagen aus Fäden, die mit dem Teil des Rohlings entsprechend der Fuß-Vorform geteilt werden und in der Blatt-Vorform nicht verwendet werden.

8. Verfahren nach Anspruch 5 oder 7, wobei die Anordnung von Lagen des zweiten Teils der Vorform eine Gruppe von zusätzlichen Lagen aus Fäden umfasst, die mit der Fuß- oder Schaufelblatt-Vorform nicht geteilt werden.

9. Verfahren nach einem der Ansprüche 4 bis 8, wobei die Formung des Faserrohlings durchgeführt wird, um eine Faservorform aus einem Stück zu erhalten, die ferner einen vierten Teil aufweist, der die Vorform der inneren Plattform bildet, und die Blatt-Vorform eine Anordnung von Lagen aus Fäden umfasst, die mit der Fuß-Vorform geteilt werden und von einer Anordnung von Lagen aus Fäden der Vorform der inneren Plattform im Bereich von deren Platzierung gekreuzt werden.

10. Verfahren nach Anspruch 1, wobei die Turbomaschinenschaufel eine feststehende Turbomaschinenschaufel (110) ist und die Schaufel aus Verbundmaterial mit durch eine Matrix verdichteter Faserverstärkung besteht und ein Blatt (120), eine erste Plattform (130), die sich an einem Längsende des Blatts befindet und eine Innenseite zur Begrenzung des Strömungsgangs und eine der Innenseite gegenüberliegende Außenseite aufweist, sowie Montagehaken (152, 154) umfasst, die sich von der Außenseite der ersten Plattform erstrecken und sich mit der Außenseite gemäß einer im Wesentlichen umlaufenden Richtung verbinden, wobei das Verfahren umfasst:
- die Herstellung eines Faserrohlings in einem Stück (400) durch mehrlagige Verwebung,
- die Formung des Faserrohlings, um eine Faservorform aus einem Stück zu erhalten, mit einem ersten Teil (402), der eine Blatt-Vorform (420) bildet, einem zweiten Teil (414), der eine Vorform der ersten Plattform (430) und Schaufelmontagehaken-Vorformen bildet, und
- die Verdichtung der Faservorform durch eine Matrix, um eine Schaufel aus Verbundmaterial mit einer Faserverstärkung zu erhalten, die durch die Vorform gebildet und durch die Matrix verdichtet wird und mit dem Blatt, der ersten Plattform und den Montagehaken, die integriert sind, ein Stück bildet,
wobei in dem Verfahren der zweite Teil der Vorform eine Anordnung von Lagen aus Fäden umfasst, die untereinander durch Verwebung unter Einbringung von unverbundenen Zonen verbunden sind, welche das Ausstülpen der Vorformen der Montagehaken in Bezug auf die Vorform der ersten Plattform erlauben, und wobei der Teil des Faserrohlings entsprechend dem zweiten Teil der Vorform eine oder mehrere Lagen aus Fäden umfasst, die aus dem Teil des Faserrohlings, welcher der Blatt-Vorform entspricht, abgegriffen werden, in einem oder mehreren Bereichen in Längsrichtung, wobei die Blatt-Vorform eine in Längsrichtung variable Dicke aufweist.

11. Verfahren nach Anspruch 10, wobei die Anordnung von Lagen des zweiten Teils der Vorform eine Gruppe von Lagen aus Fäden umfasst, die mit der Blatt-Vorform geteilt werden.

12. Verfahren nach Anspruch 1, wobei die Turbomaschinenschaufel eine feststehende Turbomaschinenschaufel (110) ist und die Schaufel aus Verbundmaterial mit durch eine Matrix verdichteter Faserverstärkung besteht und ein Blatt (120), eine erste Plattform (130), die sich an einem Längsende des Blatts befindet und eine Innenseite zur Begrenzung des Strömungsgangs und eine der Innenseite gegenüberliegende Außenseite aufweist, sowie zumindest ein verschleißbares Trägerelement (162, 164) umfasst, das sich von der Außenseite der ersten Plattform erstreckt und sich mit der Außenseite gemäß einer im Wesentlichen umlaufenden Richtung verbindet, wobei das Verfahren umfasst:
- die Herstellung eines Faserrohlings in einem Stück (400) durch mehrlagige Verwebung,
- die Formung des Faserrohlings, um eine Faservorform aus einem Stück (410) zu erhalten, mit einem ersten Teil (402), der eine Blatt-Vorform (420) bildet, einem zweiten Teil (413), der eine Vorform der ersten Plattform (430) und zumindest eine Vorform des verschleißbaren Trägerelements (462; 464) bildet, und
- die Verdichtung der Faservorform durch eine Matrix, um eine Schaufel aus Verbundmaterial mit einer Faserverstärkung zu erhalten, die durch die Vorform gebildet und durch die Matrix verdichtet wird und mit dem Blatt, der ersten Plattform und dem zumindest einen verschleißbaren Trägerelement, die integriert sind, ein Stück bildet,
wobei in dem Verfahren der zweite Teil der Vorform eine Anordnung von Lagen aus Fäden umfasst, die untereinander durch Verwebung unter Einbringung von unverbundenen Zonen verbunden sind, welche das Ausstülpen der Vorform des verschleißbaren Trägerelements in Bezug auf die Vorform der ersten Plattform erlauben, und wobei der Teil des Faserrohlings entsprechend dem zweiten Teil der Vorform eine oder mehrere Lagen aus Fäden umfasst, die aus dem Teil des Faserrohlings, welcher der Blatt-Vorform entspricht, abgegriffen werden, in einem oder mehreren Bereichen in Längsrichtung, wobei die Blatt-Vorform eine in Längsrichtung variable Dicke aufweist.

13. Verfahren nach Anspruch 12, wobei die Anordnung von Lagen des zweiten Teils der Vorform eine Gruppe von Lagen aus Fäden umfasst, die mit der Blatt-Vorform geteilt werden.

14. Verfahren nach einem der Ansprüche 1 bis 13, wobei in dem Faserrohling die Anordnung von Lagen aus Fäden Lagen aus Kettfäden umfasst, die sich in der Längsrichtung der Schaufel erstrecken, und die unverbundenen Zonen sich auf kontinuierliche Weise in der Kettrichtung zwischen den gegenüberliegenden Seiten des Teils des Faserrohlings entsprechend dem zweiten Teil der Vorform erstrecken, über einen begrenzten Abstand in der Schussrichtung.

15. Verfahren nach einem der Ansprüche 1 bis 13, wobei in dem Faserrohling die Anordnung von Lagen aus Fäden Lagen aus Schussfäden umfasst, die sich in der Längsrichtung der Schaufel erstrecken, und die unverbundenen Zonen sich auf kontinuierliche Weise in der Schussrichtung zwischen den gegenüberliegenden Seiten des Teils des Faserrohlings entsprechend dem zweiten Teil der Vorform erstrecken, über einen begrenzten Abstand in der Kettrichtung.

16. Turbomaschinenschaufel (110; 120), umfassend ein Blatt (120; 220), eine erste Plattform (140; 240), die sich an einem Längsende des Blatts befindet und eine Innenseite zur Begrenzung des Strömungsgangs und eine der Innenseite gegenüberliegende Außenseite aufweist, und zumindest ein Funktionselement (152; 252), das sich von der Außenseite der ersten Plattform erstreckt und sich mit der Außenseite gemäß einer im Wesentlichen umlaufenden Richtung verbindet,
- wobei die Schaufel aus einem Stück aus Verbundmaterial, umfassend eine mehrlagig verwebte Faserverstärkung, die durch eine Matrix verdichtet ist, besteht, und
- wobei die Faserverstärkung aus einem Stück mit einem ersten Teil, der eine Schaufelblatt-Verstärkung bildet, und einem zweiten Teil, der eine Verstärkung der ersten Schaufelplattform und zumindest einer Funktionselement-Verstärkung bildet, besteht,
wobei die Schaufel **dadurch gekennzeichnet ist, dass**
der zweite Teil der Faserverstärkung eine Anordnung von Lagen aus Fäden umfasst, die untereinander vollständig durch Verwebung verbunden sind, außer im Bereich einer Trennungszone zwischen der oder jeder Funktionselement-Verstärkung und der Verstärkung der ersten Plattform.

17. Schaufel nach Anspruch 16, wobei die Schaufel eine bewegliche Turbomaschinenschaufel (210) ist, umfassend ein Blatt (220), eine äußere Plattform (240), die ein Schaufeldeckband bildet, das sich an einem Längsende des Blatts befindet und eine Innenseite zur Begrenzung des Strömungsgangs und eine der Innenseite gegenüberliegende Außenseite aufweist, und Deckbandlaschen (252, 254), die sich von der Außenseite des Deckbands erstrecken und sich mit der Außenseite gemäß einer im Wesentlichen umlaufenden Richtung verbinden,
- wobei die Schaufel aus einem Stück aus Verbundmaterial, umfassend eine mehrlagig verwebte Faserverstärkung, die durch eine Matrix verdichtet ist, besteht, und
- wobei die Faserverstärkung aus einem Stück mit einem ersten Teil, der eine Blatt-Verstärkung bildet, und einem zweiten Teil, der eine Verstärkung des Deckbands und Verstärkungen der Deckbandlaschen bildet, besteht,
wobei bei der Schaufel der zweite Teil der Faserverstärkung eine Anordnung von Lagen aus Fäden umfasst, die untereinander vollständig durch Verwebung verbunden sind, außer im Bereich von Trennungszonen zwischen den Verstärkungen der Deckbandlaschen und der Verstärkung des Deckbands.

18. Schaufel nach Anspruch 16, wobei die Schaufel eine feststehende Turbomaschinenschaufel (110) ist, umfassend ein Blatt (120), eine erste Plattform (140), die sich an einem Längsende des Blatts befindet und eine Innenseite zur Begrenzung des Strömungsgangs und eine der Innenseite gegenüberliegende Außenseite aufweist, und Schaufelmontagehaken (152, 154), die sich von der Außenseite der ersten Plattform (140) erstrecken und sich mit der Außenseite gemäß einer im Wesentlichen umlaufenden Richtung verbinden,
- wobei die Schaufel aus einem Stück aus Verbundmaterial, umfassend eine mehrlagig verwebte Faserverstärkung, die durch eine Matrix verdichtet ist, besteht, und
- wobei die Faserverstärkung aus einem Stück mit einem ersten Teil, der eine Blatt-Verstärkung bildet, und einem zweiten Teil, der eine Verstärkung der ersten Plattform und Montagehaken-Verstärkungen bildet, besteht,
wobei bei der Schaufel der zweite Teil der Faserverstärkung eine Anordnung von Lagen aus Fäden umfasst, die untereinander vollständig durch Verwebung verbunden sind, außer im Bereich von Trennungszonen zwischen den Montagehaken-Verstärkungen und der Verstärkung der ersten Plattform.

19. Schaufel nach Anspruch 16, wobei die Schaufel eine feststehende Turbomaschinenschaufel (110) ist, umfassend ein Blatt (120), eine erste Plattform (130), die sich an einem Längsende des Blatts befindet und eine Innenseite zur Begrenzung des Strömungsgangs und eine der Innenseite gegenüberliegende Außenseite aufweist, und zumindest ein verschleißbares Trägerelement (162; 164), das sich von der Außenseite der ersten Plattform erstreckt und sich mit der Außenseite gemäß einer im Wesentlichen umlaufenden Richtung verbindet,
- wobei die Schaufel aus einem Stück aus Verbundmaterial, umfassend eine mehrlagig verwebte Faserverstärkung, die durch eine Matrix verdichtet ist, besteht, und
- wobei die Faserverstärkung aus einem Stück mit einem ersten Teil, der eine Blatt-Verstärkung bildet, und einem zweiten Teil, der eine Verstärkung der ersten Plattform und zumindest einer Verstärkung des verschleißbaren Trägerelements bildet, besteht,
wobei bei der Schaufel der zweite Teil der Faserverstärkung eine Anordnung von Lagen aus Fäden umfasst, die untereinander vollständig durch Verwebung verbunden sind, außer im Bereich von Trennungszonen zwischen der oder jeder Verstärkung des verschleißbaren Trägerelements und der Verstärkung der ersten inneren Plattform.

20. Schaufel nach einem der Ansprüche 16 bis 18, wobei die Anordnung von Lagen aus Fäden des zweiten Teils der Verstärkung eine Gruppe von Lagen aus Fäden umfasst, die mit der Blatt-Verstärkung geteilt werden.

21. Turbinen- oder Kompressorrad für eine Turbomaschine, umfassend Schaufeln nach einem der Ansprüche 16 bis 19 aus Verbundmaterial mit keramischer Matrix.

22. Kompressorrad für eine Turbomaschine, umfassend Schaufeln nach einem der Ansprüche 16 bis 19 aus Verbundmaterial mit organischer Matrix.

23. Turbomaschine mit zumindest einem Turbinen- oder Kompressorrad nach Anspruch 21 oder Anspruch 22.

## Claims

1. A method of fabricating a turbine engine blade, the blade being made of composite material comprising fiber reinforcement densified by a matrix and comprising an airfoil, a first platform situated at one longitudinal end of the airfoil and having an inside face defining a flow passage and an outside face opposite from the inside face, and at least one functional element projecting from the outside face of the first platform and connecting with said outside face in a direction that is substantially circumferential, the method comprising:
• making a single-piece fiber blank (300; 400) by multilayer weaving;
• shaping the fiber blank to obtain a single-piece fiber preform (310; 410) having a first portion (302; 402) forming a preform for the blade airfoil (320; 420) and a second portion (313, 314; 413, 414) forming a preform for the first platform and a preform for at least one functional element; and
• densifying the fiber preform with a matrix in order to obtain a composite material blade (110; 210) having fiber reinforcement formed by the preform and densified by the matrix and forming a single piece incorporating the airfoil (120; 220), the first platform (140; 240), and said at least one functional element;
in which method the second portion of the preform comprises a set of yarn layers interlinked by weaving with at least one non-interlinked zone being arranged therein enabling the or each functional element preform to be deployed relative to the preform for the first platform, at one or more locations positioned in the longitudinal direction, the airfoil preform being of varying thickness in the longitudinal direction, said method being **characterized in that** the fiber blank portion corresponding to the second preform portion includes one or more yarn layers taken from the portion of the fiber blank corresponding to the airfoil preform.

2. A method according to claim 1, wherein the set of layers of the second preform portion includes a group of yarn layers in common with the airfoil preform.

3. A method according to claim 1 or claim 2, wherein the fiber blank is shaped in order to obtain a single-piece fiber preform also having a third portion forming a preform for a second platform situated at a longitudinal end of the airfoil remote from its end where the first platform is located, and the set of yarn layers of the fiber blank portion corresponding to the second preform portion includes a group of yarn layers in common with the portion of the fiber blank corresponding to the airfoil preform and a group of yarn layers in common with the blank portion corresponding to the second platform preform.

4. A method according to claim 1, wherein the turbine engine blade is a rotor blade being made of composite material comprising fiber reinforcement densified by a matrix and comprising a root (260), an airfoil (220), an outer platform (240) forming a head situated at one longitudinal end of the airfoil and having an inside face defining a flow passage and an outside face opposite from the inside face, and head wipers (252, 254) each projecting from the outside face of the head and connecting with said outside face in a direction that is substantially circumferential, the method comprising:
• making a single-piece fiber blank (300) by multilayer weaving;
• shaping the fiber blank to obtain a single-piece fiber preform (310) having a first portion forming a preform for the airfoil (320), a second portion (314) forming a preform for the head and preforms for the wipers, and a third portion (306) extending the first portion and forming a preform for the root; and
• densifying the fiber preform with a matrix in order to obtain a composite material blade having fiber reinforcement formed by the preform and densified by the matrix and forming a single piece incorporating the root, the airfoil, the head, and the head wipers;
in which method the second portion of the preform comprises a set of yarn layers interlinked by weaving with non-interlinked zones being arranged therein enabling the preforms for the head wipers to be deployed relative to the preform for the head, and wherein the fiber blank portion corresponding to the second preform portion includes one or more yarn layers taken from the portion of the fiber blank corresponding to the airfoil preform at one or more locations positioned in the longitudinal direction, the airfoil preform being of varying thickness in the longitudinal direction.

5. A method according to claim 4, wherein the set of layers of the second preform portion includes a group of yarn layers in common with the blade airfoil preform.

6. A method according to claim 4 or claim 5, wherein the fiber blank is shaped in order to obtain a single-piece fiber preform also having a fourth portion forming a preform for an inner platform, and the set of yarn layers of the fiber blank portion corresponding to the second preform portion includes a group of yarn layers in common with the portion of the fiber blank corresponding to the airfoil preform and a group of yarn layers in common with the blank portion corresponding to the inner platform preform.

7. A method according to any one of claims 4 to 6, wherein the blade root preform comprises a number of yarn layers that is greater than the number of yarn layers of the airfoil preform, and, in the fiber blank, the set of yarn layers of the portion of the blank corresponding to the second preform portion comprises a group of yarn layers in common with the portion of the blank corresponding to the airfoil preform, and a group of yarn layers in common with the portion of the blank corresponding to the root preform and not used in the airfoil preform.

8. A method according to claim 5 or claim 7, wherein the set of layers of the second preform portion includes an additional group of yarn layers not in common with the root preform or with the blade preform.

9. A method according to any one of claims 4 to 8, wherein the fiber blank is shaped to obtain a single-piece fiber preform also having a fourth portion forming an inner platform preform, and the airfoil preform includes a set of yarn layers in common with the root preform and crossed by a set of yarn layers of the inner platform preform at the location of the inner platform.

10. A method according to claim 1, wherein the turbine engine blade is a stator blade (110) being made of composite material comprising fiber reinforcement densified by a matrix and comprising an airfoil (120), a first platform (130) situated at one longitudinal end of the airfoil and having an inside face defining a flow passage and an outside face opposite from the inside face, and mounting hooks (152, 154) projecting from the outside face of the first platform and connecting with said outside face in a direction that is substantially circumferential, the method comprising:
• making a single-piece fiber blank (400) by multilayer weaving;
• shaping the fiber blank to obtain a single-piece fiber preform having a first portion (402) forming a preform for the airfoil (420), a second portion (414) forming a preform for the first platform (430), and preforms for the mounting hooks; and
• densifying the fiber preform with a matrix in order to obtain a composite material blade having fiber reinforcement formed by the preform and densified by the matrix and forming a single piece incorporating the airfoil, the first platform, and the mounting hooks;
in which method the second portion of the preform comprises a set of yarn layers interlinked by weaving with non-interlinked zones being arranged therein enabling the mounting hook preforms to be deployed relative to the preform for the first platform, and wherein the fiber blank portion corresponding to the second preform portion includes one or more yarn layers taken from the portion of the fiber blank corresponding to the airfoil preform at one or more locations positioned in the longitudinal direction, the airfoil preform being of varying thickness in the longitudinal direction.

11. A method according to claim 10, wherein the set of layers of the second preform portion includes a group of yarn layers in common with the airfoil preform.

12. A method according to claim 1, wherein the turbine engine blade is a stator blade being made of composite material comprising fiber reinforcement densified by a matrix and comprising an airfoil (120), a first platform (130) situated at one longitudinal end of the airfoil and having an inside face defining a flow passage and an outside face opposite from the inside face, and at least one abradable support element (162; 164) projecting from the outside face of the first platform and connecting with said outside face in a direction that is substantially circumferential, the method comprising:
• making a single-piece fiber blank (400) by multilayer weaving;
• shaping the fiber blank to obtain a single-piece fiber preform (410) having a first portion (402) forming a preform for the airfoil (420), a second portion (413) forming a preform for the first platform (430), and at least one preform for an abradable support element (462; 464); and
• densifying the fiber preform with a matrix in order to obtain a composite material blade having fiber reinforcement formed by the preform and densified by the matrix and forming a single piece incorporating the airfoil, the first platform, and at least one abradable support element;
in which method the second portion of the preform comprises a set of yarn layers interlinked by weaving with non-interlinked zones being arranged therein enabling the abradable support element preforms to be deployed relative to the preform for the first platform, and wherein the fiber blank portion corresponding to the second preform portion includes one or more yarn layers taken from the portion of the fiber blank corresponding to the airfoil preform at one or more locations positioned in the longitudinal direction, the airfoil preform being of varying thickness in the longitudinal direction.

13. A method according to claim 12, wherein the set of layers of the second preform portion includes a group of yarn layers in common with the airfoil preform.

14. A method according to any one of claims 1 to 13, wherein, in the fiber blank, said set of yarn layers comprises warp yarn layers running in the longitudinal direction of the blade, and said non-interlinked zones run continuously in the warp direction between opposite sides of the fiber blank portion corresponding to the second preform portion over a distance that is limited in the weft direction.

15. A method according to any one of claims 1 to 13, wherein, in the fiber blank, said set of yarn layers comprises weft yarn layers running in the longitudinal direction of the blade, and said non-interlinked zones run continuously in the weft direction between opposite sides of the fiber blank portion corresponding to the second preform portion over a distance that is limited in the warp direction.

16. A turbine engine blade (110; 210) comprising an airfoil (120; 220), a first platform (140; 240) situated at a longitudinal end of the airfoil and having an inside face defining a flow passage and an outside face opposite from the inside face, and at least one functional element (152; 252) extending from the outside face of the first platform and connecting with said outside face in a direction that is substantially circumferential;
• the blade being a single piece of composite material comprising multilayer woven fiber reinforcement densified by a matrix; and
• the fiber reinforcement being a single piece with a first portion forming reinforcement for a blade airfoil and a second portion forming reinforcement for a first blade platform and for at least one functional element;
the blade being **characterized in that** the second fiber reinforcement portion comprises a set of yarn layers all interlinked by weaving, apart from in a separation zone between the reinforcement for the or each functional element and the reinforcement for the first platform.

17. A turbine engine blade according to claim 16, the blade being a rotor blade (210) comprising an airfoil (220), an outer platform (240) forming a blade head situated at a longitudinal end of the airfoil and having an inside face defining a flow passage and an outside face opposite from the inside face, and head wipers (252, 254) extending from the outside face of the head and connecting with said outside face in a direction that is substantially circumferential;
• the blade being a single piece of composite material comprising multilayer woven fiber reinforcement densified by a matrix; and
• the fiber reinforcement being a single piece with a first portion forming reinforcement for the airfoil and a second portion forming reinforcement for the head and reinforcement for the head wipers;
in which blade the second fiber reinforcement portion comprises a set of yarn layers all interlinked by weaving, apart from in separation zones between the reinforcement for the head wipers and the reinforcement for the head.

18. A turbine engine blade according to claim 16, the blade being a stator blade (110) comprising an airfoil (120), a first platform (140) situated at a longitudinal end of the airfoil and having an inside face defining a flow passage and an outside face opposite from the inside face, and blade mounting hooks (152, 154) extending from the outside face of the first platform (140) and connecting with said outside face in a direction that is substantially circumferential;
• the blade being a single piece of composite material comprising multilayer woven fiber reinforcement densified by a matrix; and
• the fiber reinforcement being a single piece with a first portion forming reinforcement for the airfoil and a second portion forming reinforcement for the first platform and reinforcement for the mounting hooks;
in which blade the second fiber reinforcement portion comprises a set of yarn layers all interlinked by weaving, apart from in separation zones between the reinforcement for the mounting hooks and the reinforcement for the first platform.

19. A turbine engine blade according to claim 16, the blade being a stator blade (110) comprising an airfoil (120), a first platform (130) situated at a longitudinal end of the airfoil and having an inside face defining a flow passage and an outside face opposite from the inside face, and at least one abradable support element (162; 164) extending from the outside face of the first platform and connecting with said outside face in a direction that is substantially circumferential;
• the blade being a single piece of composite material comprising multilayer woven fiber reinforcement densified by a matrix; and
• the fiber reinforcement being a single piece with a first portion forming reinforcement for the airfoil and a second portion forming reinforcement for the first platform and reinforcement for at least one abradable support element;
in which blade the second fiber reinforcement portion comprises a set of yarn layers all interlinked by weaving, apart from in separation zones between the reinforcement for the or each abradable support element and the reinforcement for the first inner platform.

20. A blade according to any one of claims 16 to 18, in which the set of yarn layers of the second reinforcement portion includes a group of yarn layers in common with the airfoil reinforcement.

21. A turbine or compressor wheel for a turbine engine and including blades according to any one of claims 16 to 19 made of ceramic matrix composite material.

22. A turbine engine compressor wheel including blades according to any one of claims 16 to 19 made of organic matrix composite material.

23. A turbine engine having at least one turbine or compressor rotor wheel according to claim 21 or claim 22.
